# EUROPEAN PATENT APPLICATION

(11) **EP 4 502 389 A2**
(43) Date of publication of application: **05.02.2025**
(21) Application number: 23905902.5
(22) Date of filing: 19.12.2023
(51) Int. Cl.: F04D 25/08, F04D 29/32, F04D 27/00, F04D 29/40, F04D 29/26, H02P 6/182, H02H 7/085, H02J 7/00

(54) **PORTABLE FAN, DRIVING CIRCUIT FOR PORTABLE FAN, AND HANDHELD FAN**

(30) Priority: 19.12.2022 CN 202223413732 U; 23.12.2022 CN 202223488670 U; 04.01.2023 CN 202320027723 U; 19.06.2023 CN 202321579734 U
(71) Applicant: Shenzhen Jisu Technology Co., Ltd, Shenzhen, Guangdong (CN)
(72) Inventor: ZHENG, Guanzheng, Shenzhen, Guangdong 518129 (CN); LI, Xiangfu, Shenzhen, Guangdong 518129 (CN); GAO, Haijun, Shenzhen, Guangdong 518129 (CN); XIE, Jiahang, Shenzhen, Guangdong 518129 (CN); YANG, Yinggai, Shenzhen, Guangdong 518129 (CN)
(74) Representative: Herrero & Asociados, S.L.
(86) International application number: PCT/CN2023/139669
(87) International publication number: WO 2024/131739

(57) **Abstract**

A portable fan includes: an air duct portion, an airflow portion, a handheld portion. The air duct portion defines an air guiding cavity therein. The air duct portion defines an air outlet and an air inlet communicating to the air guiding cavity. A positioning protruding post is arranged inside the air duct portion. The airflow portion includes rotation air blades and a drive portion driveably connected to the rotation air blades. The rotation air blades are received in the air guiding cavity and are facing towards the air outlet; the drive portion includes a stator and a rotor sleeving the stator; the rotor is mounted on the rotation air blades and is coaxial with the rotation air blades. The handheld portion is connected to the air duct portion. The handheld portion defines a mounting cavity, a power supply assembly is received therein and electrically connected to the drive portion.

## Description

### TECHNICAL FIELD

The present disclosure relates to the field of fans, and in particular to a portable fan, drive circuit of portable fan, and handheld fan.

### BACKGROUND

A fan is a very commonly-used domestic appliance for daily life. The fan drives the air to flow for cooling. A portable fan in the art is light in weight and can be easily carried, and therefore, the portable fan is popular among customers. The portable fan needs to have a reduced height and a compact size. However, for the portable fan in the art, a skeleton of a stator of a motor is arranged with an increased number of coils, such that a large internal space of the portable fan is occupied.

### SUMMARY OF THE DISCLOSURE

Therefore, the present disclose provides a portable fan, including: an air duct portion, an airflow portion, and a handheld portion. The air duct portion includes a body portion. The body portion defines an air guiding cavity therein; the air duct portion defines an air outlet and an air inlet respectively at opposite ends thereof; the air outlet and the air inlet are communicated to the air guiding cavity, and a positioning protruding post is arranged inside the body portion. The airflow portion includes rotation air blades and a drive portion that is driveably connected to the rotation air blades. The rotation air blades are rotatably received in the air guiding cavity and are arranged facing towards the air outlet; the drive portion comprises a stator and a rotor sleeving an outside of the stator; the rotor is fixedly mounted on the rotation air blades and is coaxially arranged with the rotation air blades; the stator fixedly sleeves the positioning protruding post. The handheld portion is connected to the air duct portion. The handheld portion defines a mounting cavity; a power supply assembly is received in the mounting cavity; and the power supply assembly is electrically connected to the drive portion.

### BRIEF DESCRIPTION OF THE DRAWINGS

The present disclosure will be illustrates based on embodiments by referring to the accompanying drawings. The accompanying drawings of the present disclosure are used only to describe the embodiments. Any ordinary skilled person in the art may easily obtain other embodiments based on the described operations without deviating from the principles of the present disclosure.

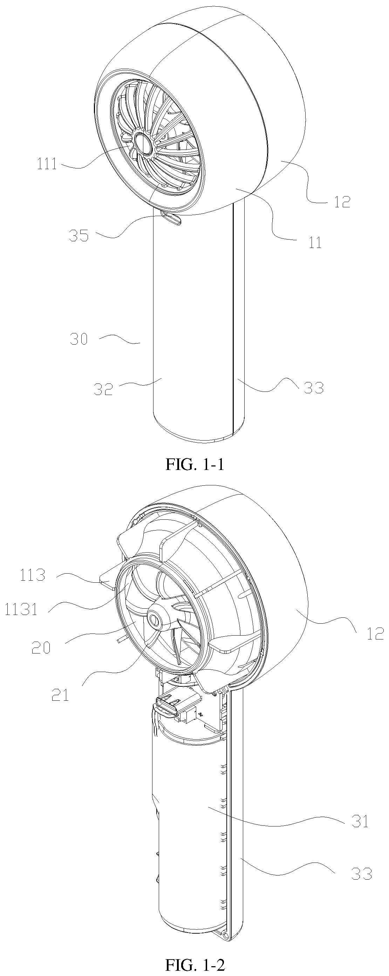

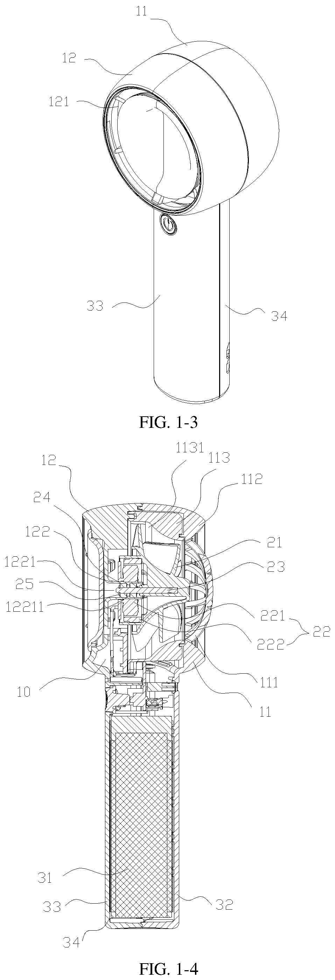

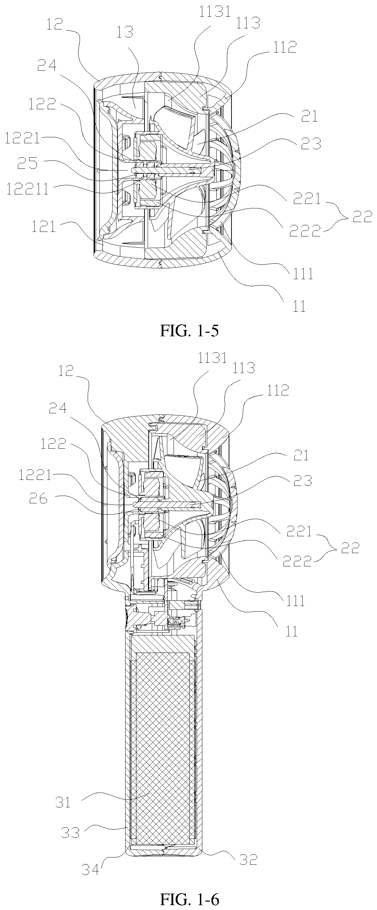

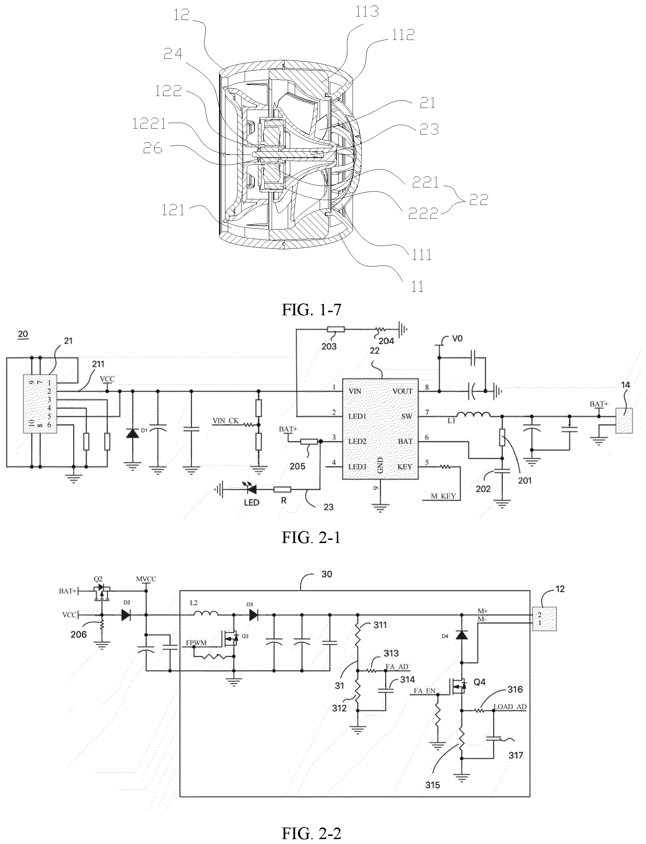

FIG. 1-1 is a structural schematic view of a fan according to embodiments of the present disclosure.
FIG. 1-2 is a structural schematic view of the fan, having partial structure omitted, according to embodiments of the present disclosure.
FIG. 1-3 is a structural schematic view of the fan, being viewed from another viewing angle, according to embodiments of the present disclosure.
FIG. 1-4 is a cross-sectional view of the fan according to embodiments of the present disclosure.
FIG. 1-5 is a cross-sectional view of the fan, being viewed from another viewing angle, according to embodiments of the present disclosure.
FIG. 1-6 is a cross-sectional view of the fan according to embodiments of the present disclosure.
FIG. 1-7 is a cross-sectional view of the fan, being viewed from another viewing angle, according to embodiments of the present disclosure.
FIG. 2-1 is a schematic view of a charging and power supply circuit of a portable fan according to embodiments of the present disclosure.
FIG. 2-2 is a schematic view of a drive circuit of the portable fan according to embodiments of the present disclosure.

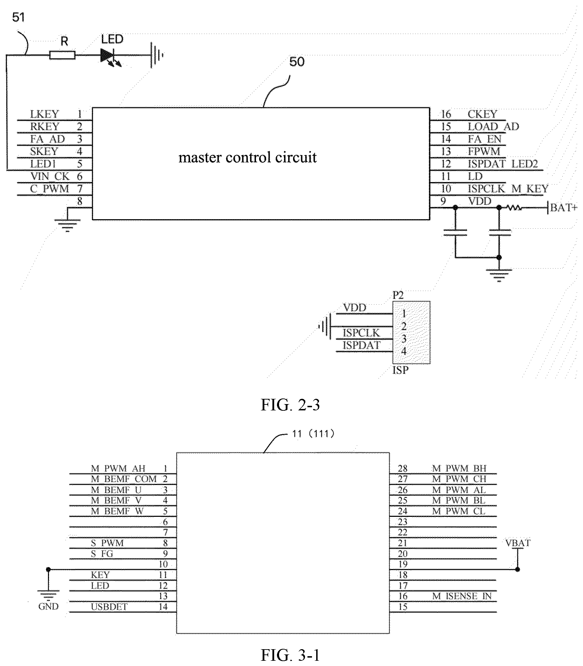

FIG. 2-3 is a schematic view of a master control circuit of the portable fan according to embodiments of the present disclosure.

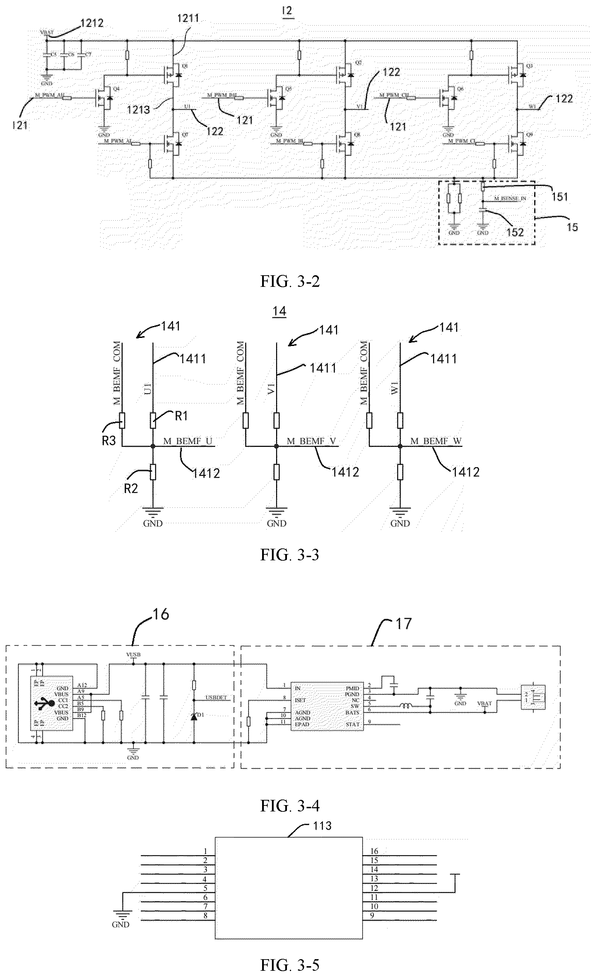

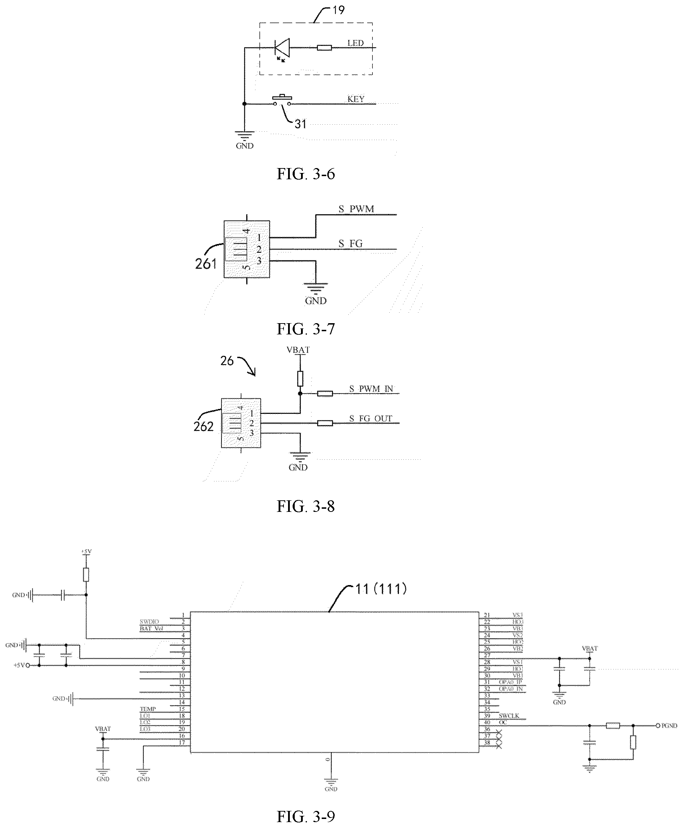

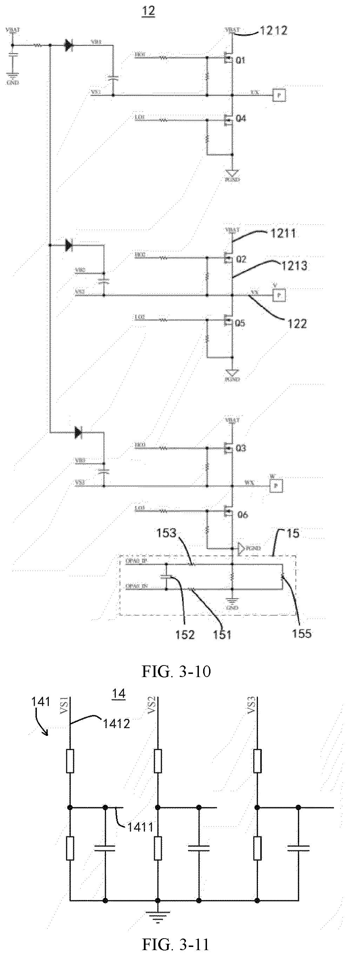

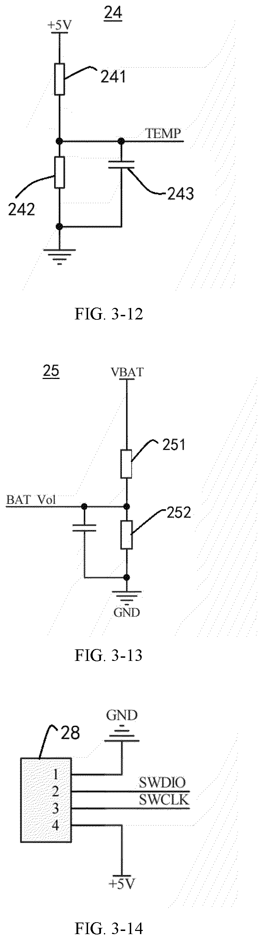

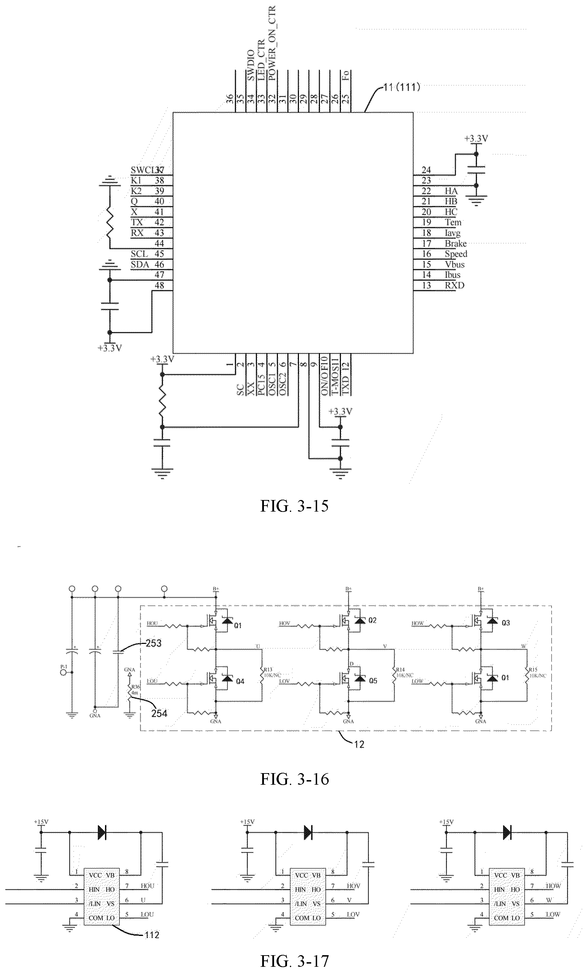

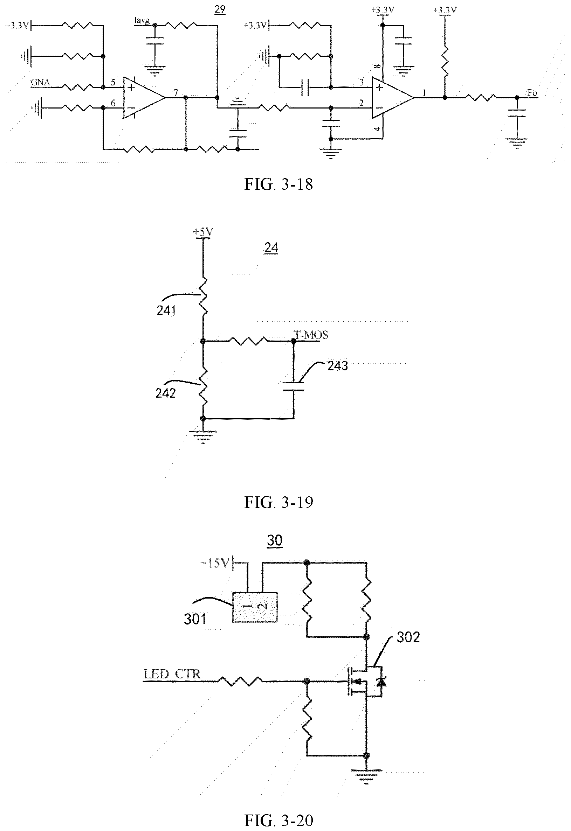

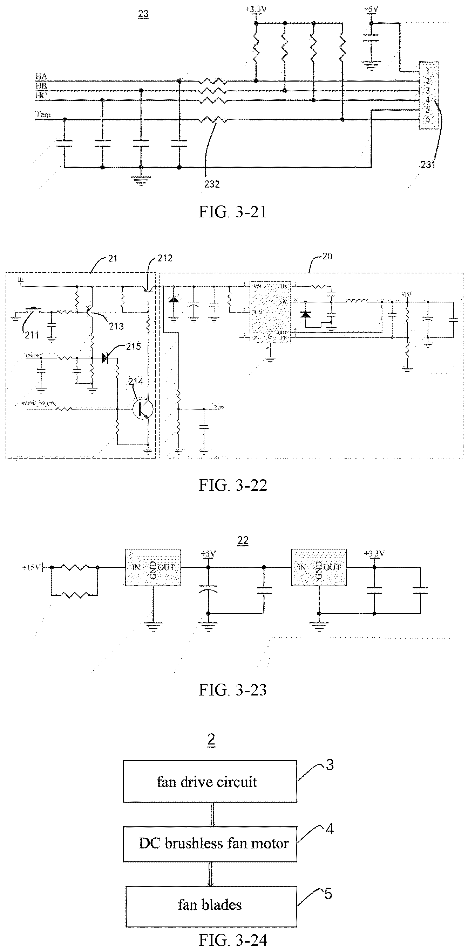

FIG. 3-1 is a circuit diagram of a master chip of a master control circuit of a fan drive circuit of the portable fan according to embodiments of the present disclosure.
FIG. 3-2 is a circuit diagram of a three-phase drive circuit and a current detection circuit of the fan drive circuit of the portable fan according to embodiments of the present disclosure.
FIG. 3-3 is a circuit diagram of an inverted-phase electric potential detection circuit of the fan drive circuit of the portable fan according to embodiments of the present disclosure.
FIG. 3-4 is a circuit diagram of an interface circuit and a charge management circuit of the fan drive circuit of the portable fan according to embodiments of the present disclosure.
FIG. 3-5 is a schematic view of an auxiliary chip of the master control circuit of the fan drive circuit of the portable fan according to embodiments of the present disclosure.
FIG. 3-6 is a circuit diagram of an indicator branch and a keypad of the fan drive circuit of the portable fan according to embodiments of the present disclosure.
FIG. 3-7 is a schematic view of a first speed regulating member of the fan drive circuit of the portable fan according to embodiments of the present disclosure.
FIG. 3-8 is a schematic view of a second speed regulating member of the fan drive circuit of the portable fan according to embodiments of the present disclosure.
FIG. 3-9 is a schematic view of the master control circuit of the fan drive circuit of the portable fan according to embodiments of the present disclosure.
FIG. 3-10 is a schematic view of the three-phase drive circuit and the current detection circuit of the fan drive circuit of the portable fan according to embodiments of the present disclosure.
FIG. 3-11 is a schematic view of the inverted-phase electric potential detection circuit of the fan drive circuit of the portable fan according to embodiments of the present disclosure.
FIG. 3-12 is a schematic view of a transistor temperature detection circuit of the fan drive circuit of the portable fan according to embodiments of the present disclosure.
FIG. 3-13 is a schematic view of a battery voltage detection circuit of the fan drive circuit of the portable fan according to embodiments of the present disclosure.
FIG. 3-14 is a schematic view of a burner interface of the fan drive circuit of the portable fan according to embodiments of the present disclosure.
FIG. 3-15 is a schematic view of the master chip of the master control circuit of the fan drive circuit of the portable fan according to embodiments of the present disclosure.
FIG. 3-16 is a schematic view of the three-phase drive circuit and the battery voltage detection circuit of the fan drive circuit of the portable fan according to embodiments of the present disclosure.
FIG. 3-17 is a schematic view of three three-phase control chips of the master control circuit of the fan drive circuit of the portable fan according to embodiments of the present disclosure.
FIG. 3-18 is a schematic view of a signal amplification circuit of the fan drive circuit of the portable fan according to embodiments of the present disclosure.
FIG. 3-19 is a schematic view of the transistor temperature detection circuit of the fan drive circuit of the portable fan according to embodiments of the present disclosure.
FIG. 3-20 is a schematic view of a light control circuit of the fan drive circuit of the portable fan according to embodiments of the present disclosure.
FIG. 3-21 is a schematic view of a Hall detection circuit of the fan drive circuit of the portable fan according to embodiments of the present disclosure.
FIG. 3-22 is a schematic view of a switch control circuit of the fan drive circuit of the portable fan according to embodiments of the present disclosure.
FIG. 3-23 is a schematic view of a direct current conversion circuit of the fan drive circuit of the portable fan according to embodiments of the present disclosure.
FIG. 3-24 is a schematic block view of the portable fan according to embodiments of the present disclosure.

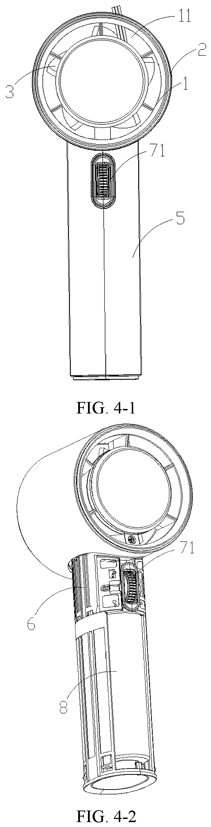

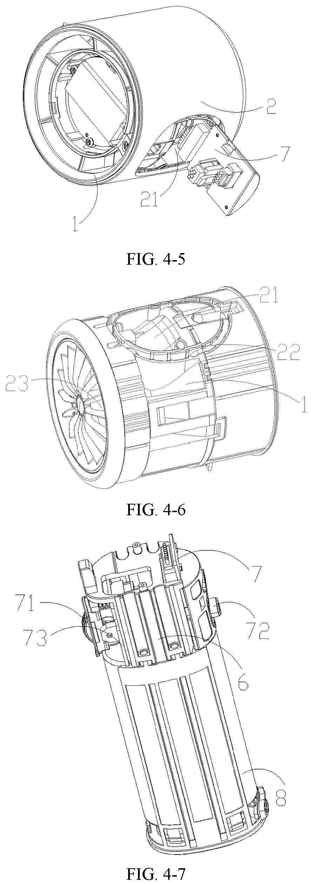

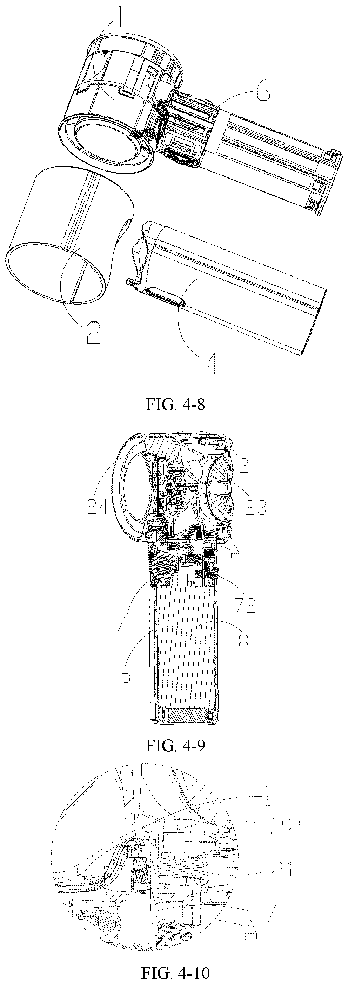

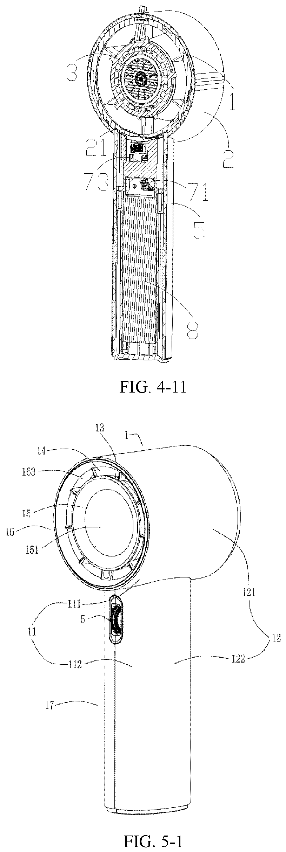

FIG. 4-1 is a schematic view of a handheld fan according to embodiments of the present disclosure.
FIG. 4-2 is a schematic view of a mounting bracket of the handheld fan according to embodiments of the present disclosure.

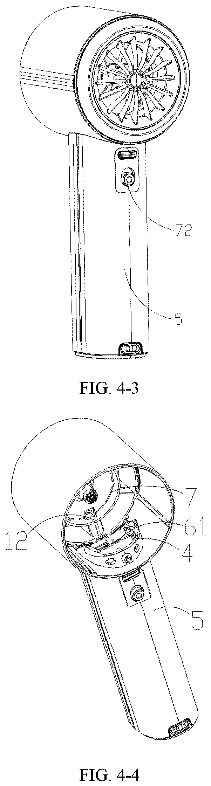

FIG. 4-3 is a schematic view of a handheld portion of the handheld fan according to embodiments of the present disclosure.
FIG. 4-4 is a schematic view of a wire opening of the handheld fan according to embodiments of the present disclosure.
FIG. 4-5 is a schematic view I of a wire groove of the handheld fan according to embodiments of the present disclosure.
FIG. 4-6 is a schematic view II of the wire groove of the handheld fan according to embodiments of the present disclosure.
FIG. 4-7 is a schematic view of a gear knob assembly and a protection switch button assembly of the handheld fan according to embodiments of the present disclosure.
FIG. 4-8 is a schematic view of an inner housing and an outer housing of the handheld fan according to embodiments of the present disclosure.
FIG. 4-9 is a schematic view of an air inlet and an air outlet of the handheld fan according to embodiments of the present disclosure.
FIG. 4-10 is an enlarged view of a portion A in FIG. 4-9.
FIG. 4-11 is a schematic view of a fan assembly of the handheld fan according to embodiments of the present disclosure.

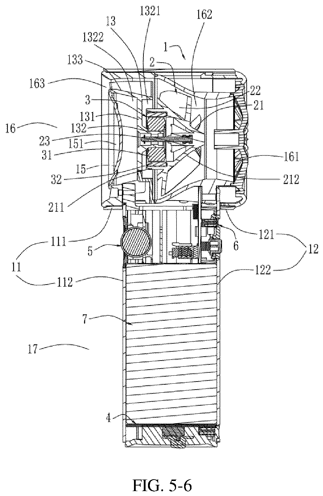

FIG. 5-1 is a perspective view of a portable fan according to embodiments of the present disclosure.

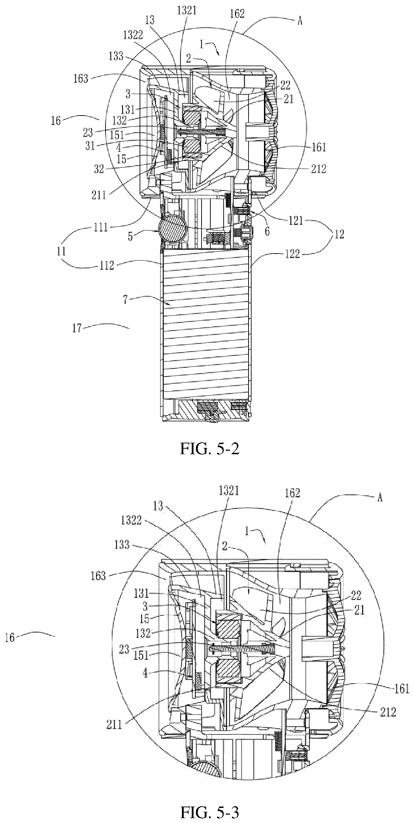

FIG. 5-2 is a cross-sectional view of the portable fan according to embodiments of the present disclosure.
FIG. 5-3 is an enlarged view of a portion A in FIG. 1-2.

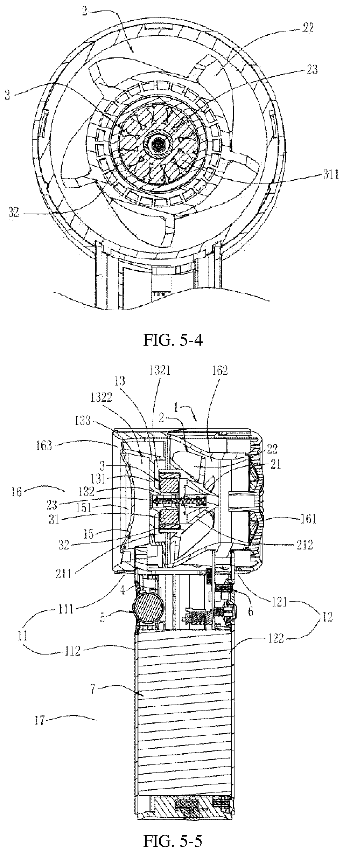

FIG. 5-4 is a cross-sectional view of the portable fan, taken from another direction, according to embodiments of the present disclosure.
FIG. 5-5 is a cross-sectional view of the portable fan according to embodiments of the present disclosure.
FIG. 5-6 is a cross-sectional view of the portable fan according to embodiments of the present disclosure.

### DETAILED DESCRIPTION

Technical solutions in the embodiments of the present disclosure will be clearly and completely described below by referring to the accompanying drawings in the embodiments of the present disclosure. It is to be understood that the specific embodiments described herein are for the purpose of explaining the present disclosure only, and do not limit the present disclosure. It is also to be noted that, for the purpose of description, only partial structures related to the present disclosure, instead of all structures, are shown in the accompanying drawings. Based on the embodiments of the present disclosure, all other embodiments obtained by any ordinary skilled person in the art without creative work shall fall within the scope of the present disclosure.

The terms "first", "second", and so on, in the present disclosure are used to distinguish between different objects and are not used to describe a particular order. In addition, the terms "includes", "have", and any variations thereof, are intended to cover non-exclusive inclusion. For example, a process, a method, a system, a product, or an apparatus including a series of steps or units is not limited to the listed steps or units, but optionally further includes steps or units that are not listed or include steps or units that are inherently included in the process, the method, the system, the product, or the apparatus.

Reference to "embodiments" herein means that particular features, structures, or characteristics described in one embodiment may be included in at least one embodiment of the present disclosure. The presence of the phrase at various sections in the specification does not necessarily refer to one same embodiment or to a separate or alternative embodiment that is exclusive of other embodiments. It is understood by any ordinary skilled person in the art, both explicitly and implicitly, that the embodiments described herein may be combined with other embodiments.

An implementation 1 is as shown in FIGS. 1-1 to 1-7.

As shown in FIGS. 1-1 to FIGS. 1-7, in order to solve the above problem, the present disclosure provides a portable fan, including: an air duct portion 10, an airflow portion 20, a handheld portion 30. The air duct portion 10 includes a body portion, the body portion defines an air guiding cavity 13. The air duct portion 10 defines an air outlet 121 and an air inlet 111 respectively at two opposite ends thereof. The air outlet 121 and the air inlet 111 are both communicated to the air guiding cavity 13. A positioning protruding post 122 is arranged inside the body portion. The airflow portion includes rotation air blades 21 and a drive portion 22 that is drivably connected to the rotation air blades 21. The rotation air blades 21 are rotatably received in the air guiding cavity 13 and are arranged facing towards the air outlet 121. The drive portion 22 includes a stator 221 and a rotor 222 sleeving an outside of the stator 221. The rotor 222 is fixedly mounted on the rotation air blades 21 and is coaxially arranged with the rotation air blades 21. The stator 221 fixedly sleeves the positioning protruding post 122. The handheld portion 30 is connected to the air duct portion 10. The handheld portion 30 defines a mounting cavity 34. A power supply assembly 31 is received in the mounting cavity 34. The power supply assembly 31 is electrically connected to the drive portion 22. For the portable fan in the present embodiment, the drive portion 22, which is driveably connected to the rotation air blades 21, is configured as the stator 221 and the rotor 222 sleeving the outside of the stator 221. The rotor 222 is fixedly mounted on the rotation air blades 21 and is coaxially arranged with the rotation air blades 21. In addition, the stator 221 fixedly sleeves the positioning protruding post 122. In this way, a driving force generated by the drive portion 22 can be directly transmitted to the rotation air blades 21 through the rotor 222, a transmission member between the drive portion 22 and the rotation air blades 21 can be omitted. a transmission efficiency of the portable fan is improved.

In an embodiment, the power supply assembly 31 is a storage battery.

As shown in FIGS. 1 and 5, in an embodiment, the body portion includes a first housing 11 and a second housing 12 connected to the first housing 11. The air guiding cavity 13 is formed between the first housing 11 and the second housing 12. The first housing 11 defines the air inlet 111, the second housing 12 defines the air outlet 121. The positioning protruding post 122 is arranged on the second housing 12 and extends along an extension direction of the air guiding cavity 13.

As shown in FIGS. 4 to 7, in an embodiment, the rotation air blades 21 defines a fixation hole, an axis of the fixation hole coincides with an axis of the rotation air blades 21. The airflow portion 20 further includes a rotation shaft 23. A first end of the rotation shaft 23 is fixedly received in the fixation hole. A positioning hole 1221 is defined inside the positioning protruding post 122. An axis of the positioning hole 1221 coincides with an axis of the rotation shaft 23. A second end of the rotation shaft 23 is rotatably received in the positioning hole 1221.

As shown in FIGS. 4 to 7, in order to improve the service life of the portable fan provided in the present embodiment, the airflow portion 20 further includes a bearing portion 24. An outer ring of the bearing portion 24 is fixed in the positioning hole 1221, and an inner ring of the bearing portion 24 sleeves the second end of the rotation shaft 23. By disposing the bearing portion 24 between the positioning hole 1221 and the rotation shaft 23, and by receiving the outer ring of the bearing portion 24 in the positioning hole 1221 and arranging the inner ring to sleeve the second end of the rotation shaft 23, direct friction between the positioning hole 1221 and the rotation shaft 23 can be avoided, such that the service life of the portable fan is effectively improved.

As shown in FIGS. 4 and 5, in an embodiment, the bearing portion 24 includes a rolling bearing, and the airflow portion 20 further includes a limiting member 25. The limiting member 25 is mounted at the second end of the rotation shaft 23. The bearing portion 24 is disposed between the limiting member 25 and the first end of the rotation shaft 23. By arranging the limiting member 25 on the second end of the rotation shaft 23, a radial movement of the rolling bearing can be effectively limited.

As shown in FIGS. 4 and 5, in an embodiment, in order to facilitate mounting of the rolling bearing, a plurality of bearing portions 24 are arranged. An inner flange 12211 is arranged on an inner wall of the positioning hole 1221. The inner flange 12211 is disposed between two adjacent bearing portions 24 to enable the two adjacent bearing portions 24 to be spaced apart from each other. By arranging the limiting member 25 on the second end of the rotation shaft 23, the inner ring of the rolling bearing can be effectively limited. By arranging the inner flange 12211 on the inner wall of the positioning hole 1221, the outer ring of the bearing can be effectively limited. In this way, the rolling bearing can be mounted effectively.

In an embodiment, the bearing portion 24 is a ball bearing, and a lubricant is provided in the ball bearing.

In an embodiment, the bearing portion 24 is a ceramic bearing, and a lubricant is provided in the ceramic bearing.

In an embodiment, the bearing portion 24 is a magnetic levitation bearing.

In an embodiment, the airflow portion 20 further includes an elastic member, the elastic member sleeves the rotation shaft 23. Two ends of the elastic member respectively abut against the inner ring of the rolling bearing and the rotation air blades 21. The elastic member applies an elastic force on the inner ring of the rolling bearing in a direction away from the air inlet 111. By arranging the elastic member, the rolling bearing can be pre-tensioned, and the service life of the rolling bearing is effectively improved.

As shown in FIGS. 6 and 7, in an embodiment, in order to improve the service life of the portable fan of the present embodiment, the bearing portion 24 includes a slide bearing. The airflow portion 20 further includes two sealing rings 26. The two sealing rings 26 both sleeve the rotation shaft 23 and are respectively located on two sides of the slide bearing. By arranging the slide bearing between the rotation shaft 23 and the positioning hole, and by arranging the inner ring of the slide bearing to be fixedly connected to the second end of the rotation shaft 23 and arranging the outer ring to be fixedly connected to the fixation hole, friction between the rotation shaft 23 and the positioning hole 1221 can be converted into friction between the inner ring and the outer ring of the slide bearing. In this way, the friction between the rotation shaft 23 and the positioning hole 1221 is avoided, and the service life of the portable fan is effectively improved.

As shown in FIGS. 4 to 7, in an embodiment, the handheld portion 30 includes a third housing 32 and a fourth housing 33 connected to the third housing 32. The mounting cavity 34 is formed between the third housing 32 and the fourth housing 33.

As shown in FIGS. 4 to 7, in an embodiment, the first housing 11 includes a housing body 112 and an air duct liner 113. The air duct liner 113 is mounted on the housing body 112. The air duct 1131 is defined inside the air duct liner 113. The air guiding cavity 13 is formed between the air duct liner 113 and the second housing 12.

Since a single-phase motor is inexpensive, most of small-sized handheld portable fans on the market are driven by single-phase motors. However, since the single-phase motor has a low rotational speed, a strong airflow cannot be provided, and a poor user experience is provided. In order to enable the small-sized handheld portable fan to provide stronger airflow, a high-speed motor needs to be arranged for driving. However, the high-speed motor occupies a large space, and the portable fan may be worn and torn.

In order to solve the above problem, the drive portion 22 is a three-phase motor. Since the drive portion 22 is the three-phase motor, a rotation speed of the rotation air blades 21 can be effectively increased, and the portable fan in this embodiment can provide a stronger airflow, the user experience is improved. In addition, due to the high rotation speed of the three-phase motor, in order to avoid sharp wear between the rotation shaft and the positioning hole due to the high-speed rotation and to ensure the service life of the portable fan, in the portable fan of the present embodiment, a bearing portion is disposed between the positioning hole and the rotation shaft. The bearing portion enables the friction between the positioning hole and the rotation shaft to be converted from sliding friction to rolling friction inside the bearing portion, such that wear and tear between the positioning hole and the rotation shaft can be avoided, the service life of the portable fan is effectively improved.

As shown in FIGS. 1 to 7, in an embodiment, the handheld portion 30 is arranged with a charging port 35. The charging port 35 is electrically connected to the power supply assembly 31. By arranging the charging port 35 on the handheld portion 30 and enabling the charging port 35 to be electrically connected to the power supply assembly 31, the power supply assembly 31 can be electrically connected to an external power supply through the charging port 35, such that an operating endurance of the portable fan is ensured.

In an embodiment, a discharging port is arranged on the handheld portion that is electrically connected to the power supply assembly. The discharging port is electrically connected to an external electronic device. The discharging port enables electric power to be transmitted from the power supply assembly to the external electronic device.

In an embodiment, the air inlet is arranged with a grill assembly. The grill assembly includes a first grill member and a second grill member. The first grill member is fixedly connected to the first housing. The second grill member is pivotally connected to the first grill member. The first grill member defines a plurality of first openings. The second grill member defines a plurality of second openings. The plurality of first openings and the plurality of second openings are in one-to-one correspondence with each other. The second grill member has a shielding state that completely shields the first openings and an open state in which the first openings and the second openings overlap with each other. By rotating the second grill member, the second grill member can be switched between the shielding state and the open state. The grill assembly provided in this embodiment can effectively adjust the amount of air intaken from the air inlet, such that the user experience is effectively improved.

In an embodiment, the air duct portion 10 and the handheld portion 30 are fixedly connected to each other. Of course, in other embodiments, the air duct portion 10 and the handheld portion 30 may be pivotally connected to each other.

In an embodiment, the third housing 32 and the first housing 11 are integrally molded to form a one-piece structure, and the fourth housing 33 and the second housing 12 are integrally molded to form a one-piece structure
In another embodiment, the third housing 32 is pivotally connected to the first housing 11, and the fourth housing 33 is pivotally connected to the second housing 12. A pivot shaft between the third housing 32 and the first housing 11 is coaxial with a pivot shaft of the fourth housing 33 and the second housing 12.

In summary, the portable fan provided in the present embodiment has at least the following beneficial technical effect. The drive portion 22, which is driveably connected to the rotation air blades 21, is configured as the stator 221 and the rotor 222 sleeving the outside of the stator 221. The rotor 222 is fixedly mounted on the rotation air blades 21 and is coaxially arranged with the rotation air blades 21. In addition, the stator 221 fixedly sleeves the positioning protruding post 122. In this way, the driving force generated by the drive portion 22 can be directly transmitted to the rotation air blades 21 through the rotor 222, the transmission device between the drive portion 22 and the rotation air blades 21 is omitted, such that the transmission efficiency of the portable fan is improved.

An implementation 2 is shown in FIGS. 2-1 to 2-3.

As shown in FIGS. 2-1 to 2-3, a control circuit of the portable fan includes a charging and power supply circuit 20, a fan drive circuit 30, a control switch Q2, and a master control circuit 50.

The charging and power supply circuit 20 is electrically connected to an external power source and a battery 14 to receive an external voltage VCC to charge the battery 14 and to output a power supply voltage V0. The fan drive circuit 30 electrically connects the charging and power supply circuit 20 with a fan assembly 12 to drive the fan assembly 12 to rotate. A control end of the control switch Q2 is configured to receive the external voltage VCC and is grounded. A first conductive end of the control switch Q2 is electrically connected to the battery 14 to receive an output voltage from the battery 14. A second conductive end of the control switch Q2 is electrically connected to the fan drive circuit 30. The control switch Q2 is disconnected when the external voltage VCC is received; and is conducted when not receiving the external voltage VCC.

The master control circuit 50 is electrically connected to the charging and power supply circuit 20, the fan drive circuit 30 and the control switch Q2. In this embodiment, as shown in FIGS. 2-1, the charging and power supply circuit 20 includes a charging port 21 and a charge management chip 22. A power end 211 of the charging port 21 receives the external voltage VCC and is electrically connected to a charging input pin VIN of the charge management chip 22. The power end 211 of the charging port 21 is electrically connected to a negative electrode of a voltage stabilizing transistor D1, and a positive electrode of the voltage stabilizing transistor D1 is grounded. A switch pin SW of the charge management chip 22 is electrically connected to the positive electrode BAT+ of the battery 14 via a first inductor L1. A boost output pin VOUT of the charge management chip 22 is configured to output the power supply voltage V0. A boost input pin of the charge management chip 22 is connected to a node between the battery 14 and the first inductor L1 via a first connection resistor 201 and is further grounded via a first grounding capacitor 202. By arranging the charge management chip 22, the voltage stabilizing transistor D1 and the first inductor L1, the charging port and charging and discharging of the battery can be effectively managed, and the power supply voltage required by other circuits can be output. A simple circuit structure is provided and can be easily achieved to and highly safe.

A keypad input end KEY of the charge management chip 22 is electrically connected to the master control circuit 50. A first LED drive pin LED1 of the charge management chip 22 is grounded via sequentially a first grounding resistor 203 and a second grounding resistor 204. A second LED drive pin LED2 of the charge management chip 22 is connected to the positive electrode of the battery 14 via a second connection resistor 205. A first indicator light pin LED1 of the master control circuit 50 is grounded via a first indicator branch 51. A second indicator branch 23 is grounded via a second indicator light branch 23. Each of the first indicator branch 51 and the second indicator branch 23 includes a current-limiting resistor R and an indicator LED that are in series connected to each other. It is understood that the keypad input end SW of the charge management chip 22 is electrically connected to the master control circuit 50, such that the master control circuit 50 can control the charge management chip 22 to ensure reliability of the control circuit. The first indicator branch 51 and the second indicator branch 23 indicate a charging state of the charging and power supply circuit 20 to improve the user experience. The master control circuit 50 may be an MCU.

As shown in FIGS. 2-2, the control end of the control switch Q2 is configured to receive the external voltage VCC and is grounded. The first conductive end of the control switch Q2 is electrically connected to the battery 14 to receive the output voltage from the battery 14. The second conductive end of the control switch Q2 is electrically connected to the fan drive circuit 30. The control switch Q2 is turned off when receiving the external voltage VCC and is turned on when not receiving the external voltage VCC. When not receiving the external voltage VCC, the fan drive circuit 30 is powered by the battery 14. By arranging the control switch Q2, when the external voltage VCC is provided, the external voltage VCC can be supplied directly to the fan drive circuit 30, the fan drive circuit 30 is prevented from using the output voltage of the battery 14. In this way, the battery 14 can be charged faster, and the service life of the battery 14 may not be affected by charging and discharging at the same time.

As shown in FIGS. 2-2, the control end of the control switch Q2 may be grounded via a third grounding resistor 206 and is electrically connected to the second conductive end of the control switch Q2 and the fan drive circuit 30 via a first diode D2. The second control switch is a P-Metal-Oxide-Semiconductor (PMOS) field effect transistor. It is understood that stability and safety of the control circuit can be enhanced by the third grounding resistor 206 and the first diode D2, and the control switch Q2 is the PMOS field effect transistor, which is low-cost, simple in structure, and can be controlled easily.

As shown in FIGS. 2-2, the fan drive circuit 30 includes a second inductor L2, a third control switch Q3, a second diode D3, and a boost feedback branch 31. An end of the second inductor L2 is electrically connected to the charging and power supply circuit 20 to receive the external voltage VCC or receive the output voltage MVCC of the battery 14. The other end of the second inductor L2 is connected to the fan assembly 12 via a second diode D3. A first conductive end of the third control switch Q3 is connected to a node between the second inductor L2 and the second diode D3. A second conductive end of the third control switch Q3 is grounded. A control end of the third control switch Q3 is electrically connected to a second pulse width signal output end FPWM of the master control circuit 50 to receive a second pulse width control signal output of from the master control circuit 50. An end of the boost feedback branch 31 is connected to the node between the second diode D3 and the fan assembly 12, the other end of the boost feedback branch 31 is grounded. The boost feedback branch 31 includes a first voltage divider resistor 311 and a second voltage divider resistor 312 that is connected in series to the first voltage divider resistor 311. A node between the first voltage divider resistor 311 and the second voltage divider resistor 312 is connected to a boost feedback end FA AD of the master control circuit 50 via a third voltage divider resistor 313. A node between the third voltage divider 313 and the master control circuit 50 is grounded via a second grounding capacitor 314. It is understood that, in the fan drive circuit 30 of the above-described embodiment, the second inductor L2 can be charged and discharged by controlling the third control switch Q3 to be turned on and off, such that a voltage on a right side of the second inductor L2 can be increased to supply power to the fan assembly 12. The boost feedback circuit 31 samples a boosted voltage and feeds the boosted voltage back to the master control circuit 50, such that the master control circuit 50 can adjust the second pulse width control signal output to the third control switch Q3. In this way, the fan assembly 12 receives a substantially constant voltage. Furthermore, by adjusting the second pulse width control signal output to the third control switch Q3, the voltage supplied to the fan assembly 12 can be increased or decreased, such that the fan assembly 12 can rotate to reach various rotation speeds.

Further, the fan drive circuit 30 further includes a fourth control switch Q4, a third diode D4, a first feedback resistor 315, a second feedback resistor 316. A negative electrode of the third diode D4 is connected to the positive electrode of the fan assembly 12. The negative electrode of the fan assembly 12 is connected to a positive electrode of the third diode D4 and a first conductive end of the fourth control switch Q4. A control end of the fourth control switch Q4 is electrically connected to a fan enabling end FA EN of the master control circuit 50. A second conductive end of the fourth control switch Q4 is grounded via the first feedback resistor 315. A node between the second conductive end of the fourth control switch Q4 and the first feedback resistor 315 is electrically connected to a load feedback end LOAD AD of the master control circuit 50 via the second feedback resistor 316. A node between the second feedback resistor 316 and the master control circuit 50 is grounded via a third grounding capacitor 317. The fourth control switch Q4 enables the voltage boosted by the second inductor L2 and the third control switch Q3 to form a circuit by the fan assembly 12 being grounded, thereby driving the fan assembly 12 to rotate. Since the first feedback resistor 315 samples signals from the node between the second conductive end of the fourth control switch Q4 and the first feedback resistor 315 and feeds the sampled signals back to the master control circuit 50, the master control circuit 50 is enabled to detect whether the fan assembly 12 is blocked from rotating or short-circuited.

An implementation 3 is shown in FIGS. 3-1 to 3-24.

As shown in FIGS. 3-1 to 3-3, the present embodiment provides a drive circuit for a portable fan. The fan drive circuit of the portable fan is applicable for various types of fans. Specifically, the drive circuit for the portable fan includes: a master control circuit 11, a three-phase drive circuit 12, and an inverted-phase electric potential detection circuit 14.

The three-phase drive circuit 12 includes at least three signal input ends 121 and three drive signal output ends 122. Each of the at least three signal input ends 121 is electrically connected to the master control circuit 11 to receive control signals. The three drive signal output ends 122 are electrically connect to three signal ends (U, V, and W) of a direct-current (DC) brushless fan motor to output a three-phase drive signal to drive the DC brushless fan motor to rotate. The inverted-phase electric potential detection circuit 14 includes three detection branches 141. Each detection branch 141 includes a detection end 1411 and a detection output end 1412 electrically connected to the detection end. Three detection ends 1411 of the three detection branches 141 are respectively electrically connected to the three drive signal output ends 122. Three detection output ends 1412 of the three detection branches 141 are electrically connected to the master control circuit 11 to respectively output a first detection signal, a second detection signal, and a third detection signal. In this way, the master control circuit 11 is informed of a phase of the three-phase drive signal based on the first detection signal, the second detection signal, and the third detection signal to adjust the control signals.

As shown in FIG. 3-3, the detection branch 141 includes a first detection resistor R1, a second detection resistor R2, and a third detection resistor R3. The first detection resistor R1 and the second detection resistor are connected to each other in series. An end of the first detection resistor R1 away from the second detection resistor R2 is the detection end 1411, and an end of the second detection resistor R2 away from the first detection resistor R1 is grounded. A node between the first detection resistor R1 and the second detection resistor R2 is the detection output end 1412.

By arranging the three-phase drive circuit 12, energy-saving performance and control performance of the fan motor are improved, and a service life of the fan drive circuit and the portable fan is extended. By arranging the inverted-phase electric potential detection circuit 14, the master control circuit 11 may be easily informed of the phase of the DC brushless fan motor, such that the master control circuit 11 may send corresponding control signals to the three-phase drive circuit 12 to control driving of the DC brushless fan motor, and reliability and stability of the driving is improved.

As shown in FIG. 3-2, the three-phase drive circuit 12 includes a first transistor Q1, a second transistor Q2, a third transistor Q3, a fourth transistor Q4, a fifth transistor Q5, a sixth transistor Q6, a seventh transistor Q7, an eighth transistor Q8, and a ninth transistor Q9. A first conductive end 1211 of the first transistor Q1, a first conductive end 1211 of the second transistor Q2, and a first conductive end 1211 of the third transistor Q3 are connected to a power supply end 1212. A first conductive end 1211 of the fourth transistor Q4 is connected to the power supply end 1212. A first conductive end 1211 of the fifth transistor Q5 is connected to the power supply end 1212. A first conduction end 1211 of the sixth transistor Q6 is connected to the power supply end 1212. A control end of the fourth transistor Q4, a control end of the fifth transistor Q5, and a control end of the sixth transistor Q6 are electrically connected to the master control circuit 11. A control end of the seventh transistor Q7 is electrically connected to the control end of the fourth transistor Q4, a control end of the eighth transistor Q8 is electrically connected to the control end of the fifth transistor Q5, and a control end of the ninth transistor Q9 is electrically connected to the control end of the sixth transistor Q6, such that the control signals are received. Second conduction ends 1213 of the fourth transistor Q4, the fifth transistor Q5, and the sixth transistor Q6 are grounded. A first conductive end 1211 of the seventh transistor Q7 is connected to a second conductive end 1213 of the first transistor Q1. A second conductive end 1213 of the seventh transistor Q7 is grounded. A first conductive end 1211 of the eighth transistor Q8 is connected to a second conductive end 1213 of the second transistor Q2. A second conductive end 1213 of the eighth transistor Q8 is grounded. A first conductive end 1211 of the ninth transistor Q9 is connected to the second conductive end 1213 of the third transistor Q3. A second conductive end 1213 of the ninth transistor Q9 is grounded. A node between the first conductive 1211 of the seventh transistor Q7 and the second conductive 1213 of the first transistor Q1, a node between the first conductive 1211 of the eighth transistor Q8 and the second conductive 1213 of the second transistor Q2, and a node between the first conductive 1211 of the ninth transistor Q9 and the second conductive 1213 of the third transistor Q3 respectively serve as the three drive signal output ends 122. The at least three signal input ends 121 are three PWM signal input ends. The control signals include three PWM signals.

As shown in FIG. 3-2, the fan drive circuit further includes a current detection circuit 15. The second conductive ends 1213 of the seventh transistor Q7, the eighth transistor Q8, and the ninth transistor Q9 are all grounded via the current detection circuit 15. The current detection circuit 15 is electrically connected to the master control circuit 11. The current detection circuit 15 includes a sense resistor 151 and a sense capacitor 152. The second conductive ends 1213 of the seventh transistor Q7, the eighth transistor Q8, and the ninth transistor Q9 are grounded via the sense resistor 151 and the sense capacitor 152 sequentially. A node between the sense resistor 151 and the sense capacitor 152 is electrically connected to the master control circuit 11. By arranging the current detection circuit 15, when a current is abnormal, the master control circuit 11 may control the fan drive circuit to stop operating or to operate at a lower power, such that an overcurrent protection is provided for the fan drive circuit, and reliability and the service life of the fan drive circuit are improved.

As shown in FIGS. 3-4 and 3-6, the fan drive circuit further includes an interface circuit 16 and a charge management circuit 17. The interface circuit 16 is configured to be electrically connected to an external power source to receive an external voltage. The charge management circuit 17 is electrically connected between the interface circuit 16 and a battery VBAT to receive the external voltage and to charge or output a power supply voltage to the battery VBAT. The fan drive circuit further includes a keypad 31. An end of the keypad 31 is connected to the master control circuit 11, and the other end of the keypad 31 is grounded. The fan drive circuit further includes an indicator branch 19. The indicator branch 19 includes a light-emitting diode and a resistor that is connected in series to the light-emitting diode. A positive electrode of the light-emitting diode is electrically connected to the master control circuit 11, and a negative electrode of the light-emitting diode is grounded.

Specifically, in the present embodiment, the fan drive circuit may be arranged for a neck fan and a handheld fan, but is not limited to the neck fan and the handheld fan, the fan drive circuit may further be applied to other portable fans such as desktop table fans, floor fans, clip fans, folding fans, and the like. Two DC brushless fan motors are respectively arranged in a left side and a right side of the neck fan and are configured to respectively drive fan blades in the left side and fan blades in the right side of the neck fan to rotate.

As shown in FIGS. 3-1, 3-2, and 3-5, the master control circuit 11 includes a master control chip 111 and an auxiliary chip 113. The master control circuit 11 includes the master control chip 111 and the auxiliary chip 113. Two three-phase drive circuits 12, two inverted-phase electric potential detection circuits 14, and two DC brushless fan motors are arranged in one-to-one correspondence to each other. The master control chip 111 is electrically connected to one of the two three-phase drive circuits 12 to output the control signals to one of the two three-phase drive circuits 12 to drive the respective one of the two brushless DC fan motors. The inverted-phase electric potential detection circuit 14 is electrically connected to one three-phase drive circuit 12 and outputs the first detection signal, the second detection signal, and the third detection signal to the master control chip 111. In this way, the master control chip 111 is informed of the phase of the three-phase drive signal of the one three-phase drive circuit 12 to adjust the control signals output to the one three-phase drive circuit 12. The auxiliary chip 113 is electrically connected to the other three-phase drive circuit 12 to output the control signals to the other three-phase drive circuit 12 to drive the other one of the two DC brushless fan motors. The other inverted-phase electric potential detection circuit 14 is electrically connected to the respective one three-phase drive circuit 12 and outputs a corresponding first detection signal, a corresponding second detection signal and a corresponding third detection signal to the auxiliary chip 113. In this way, the auxiliary chip 113 is informed of the phase of the three-phase drive signal of the other three-phase drive circuit 12 to adjust the control signals output to the other three-phase drive circuit 12.

In this embodiment, the master control chip 111, the corresponding three-phase drive circuit 12, and the corresponding inverted-phase electric potential detection circuit 14 are arranged on one module (such as on a first circuit board) and may be arranged on a same side of the neck fan as the corresponding DC brushless fan motor. The auxiliary chip 113, the corresponding three-phase drive circuit 12, and the corresponding inverted-phase electric potential detection circuit 14 are arranged on another one module (such as on a second circuit board that is independent from the first circuit board) and may be arranged on the other side of the neck fan, together with the corresponding DC brushless fan motor. It is understood that the above configuration has better rationality and compactness, and reliability of connection and driving is improved. However, arrangement of the three-phase drive circuit 12, the inverted-phase electric potential detection circuit 14, the master control chip 111, and the auxiliary chip 113 may be arranged in various manners. For example, the three-phase drive circuit 12, the inverted-phase electric potential detection circuit 14, the master control chip 111, and the auxiliary chip 113 are arranged on a same circuit board; alternatively, the three-phase drive circuit 12 and the inverted-phase electric potential detection circuit 14 are arranged on one circuit board, and the master control chip 111 and the auxiliary chip 113 are arranged on another one circuit board. The arrangement may be determined according to the actual demands, which will not described here.

As shown in FIGS. 3-7 and 3-8, the fan drive circuit further includes a first connector 261 and a speed adjustment interface circuit 26 having a second connector 262. A first pin and a second pin of the first connector 261 are electrically connected to the master control chip 111. A third pin of the first connector 261 is grounded. A first pin of the second connector 262 is connected to the battery VBAT via a first connection resistor and is also connected to the auxiliary chip 113 via a second connection resistor. A second pin of the second connector 262 is connected to the auxiliary chip 113 via a third connection resistor, and a third pin of the second connector 262 is grounded. In addition, each pin of the first connector 261 and the second connector 262 may be electrically connected to each other in one-to-one correspondence with each other. In this way, rotation speeds of the two DC brushless fan motors may be synchronously adjusted.

As shown in FIGS. 3-9 to 3-14, the fan drive circuit of a second embodiment is shown. Portions of the fan drive circuit of the present embodiment are the same as those in the first embodiment and will not be repeated. Portions of the fan drive circuit of the present embodiment that are different from those in the first embodiment will be described in the following. Firstly, the master control circuit 11 of the present embodiment is different from that of the first embodiment, and the master control circuit 11 of the present embodiment may substantially include the master control chip 111.

As shown in FIG. 3-10, in the present embodiment, the three-phase drive circuit 12 includes a first transistor Q1, a second transistor Q2, a third transistor Q3, a fourth transistor Q4, a fifth transistor Q5, and a sixth transistor Q6. A first conductive end 1211 of the first transistor Q1, a first conductive end 1211 of the second transistor Q2, and a first conductive end 1211 of the third transistor Q3 are connected to a power supply end 1212. A first conductive end 1211 of the fourth transistor Q4 is connected to a second conductive end 1213 of the first transistor Q1. A first conductive end 1211 of the fifth transistor Q5 is connected to a second conductive end 1213 of the second transistor Q2. A first conduction end 1211 of the sixth transistor Q6 is connected to a second conductive end 1213 of the third transistor Q3. A node between the first conductive 1211 of the fourth transistor Q4 and the second conductive 1213 of the first transistor Q1, a node between the first conductive 1211 of the fifth transistor Q5 and the second conductive 1213 of the second transistor Q2, and a node between the first conductive 1211 of the sixth transistor Q6 and the second conductive 1213 of the third transistor Q3 respectively serve as the three drive signal output ends 122. Control ends of the first transistor Q1, the second transistor Q2, the third transistor Q3, the fourth transistor Q4, the fifth transistor Q5, and the sixth transistor Q6 are electrically connected to the master control circuit 11 to receive the control signals; and the control signals include six PWM signals.

As shown in FIG. 3-10, substantially the same as the first embodiment, the second conductive end 1213 of the sixth transistor Q6 is grounded via the current detection circuit 15, and the current detection circuit 15 is electrically connected to the master control circuit 11. The current detection circuit 15 includes a sense resistor 151 and a sense capacitor 152. The second conductive end 1213 of the sixth transistor Q6 is grounded via the sense resistor 151. The sense capacitor 152 is connected in parallel with the sense resistor 151. A node between the sense resistor 151 and the second conduction end 1213 of the sixth transistor Q6 is electrically connected to the master control circuit 11. The current detection circuit 15 further includes a first series resistor 153, a second series resistor 154, a parallel resistor 155. The parallel resistor 155 is connected in parallel with the sense resistor 151. The first series resistance 153 is connected between an end of the sense capacitor 152 and an end of the sense resistor 151. The second series resistance 154 is connected between the other end of the sense capacitor 152 and the other end of the sense resistor 151. By arranging the current detection circuit 15, when the current is abnormal, the master control circuit 11 may control the fan drive circuit to stop operating or to operate at a lower power, such that an overcurrent protection is provided for the fan drive circuit, and reliability and the service life of the fan drive circuit are improved.

As shown in FIG. 3-11, the inverted-phase electric potential detection circuit 14 of the second embodiment is substantially the same as that of the first embodiment, and will not be repeated herein.

As shown in FIG. 3-12, the fan drive circuit further includes a transistor temperature detection circuit 24. The transistor temperature detection circuit 24 may be disposed adjacent to each transistor of the three-phase drive circuit 12 and includes a first voltage divider resistor 241 and a thermistor 242 connected in series with the first voltage divider resistor 241. The thermistor 242 is configured to sense a temperature of each transistor of the three-phase drive circuit 12. A node between the first voltage divider resistor 241 and the thermistor 242 is electrically connected to the master control circuit 11 and is configured to output a temperature signal, enabling the master control circuit 11 to control, based on the temperature signal, the fan drive circuit to enter or not enter a temperature protection state. The thermistor 242 is connected between the first voltage divider resistor 241 and the ground. The transistor temperature detection circuit 24 further includes a voltage regulated capacitor 243 connected in parallel with the thermistor 242. By arranging the transistor temperature detection circuit 24, the master control circuit 11 may be informed whether the temperature of each transistor of the three-phase drive circuit 12 is abnormal and may control the fan drive circuit to stop operating or to operate at a lower power when the temperature is abnormal. In this way, an over-temperature protection is provided for the fan drive circuit, and reliability and the service life of the fan drive circuit are improved.

As shown in FIG. 3-13, the fan drive circuit further includes a battery voltage detection circuit 25 that is electrically connected between the positive electrode of the battery VBAT and the ground. An output end of the battery voltage detection circuit 25 is electrically connected to the master control circuit 11. By arranging the battery voltage detection circuit 25, the master control circuit 11 may be informed whether a battery voltage is normal or not. When the battery voltage is abnormal, the master control circuit 11 may control the fan drive circuit to stop operating or to operate at a lower power. Therefore, reliability and the service life of the fan drive circuit are improved.

Specifically, the battery voltage detection circuit 25 includes a second voltage divider resistor 251 and a third voltage divider resistor 252 that is connected in series to the second voltage divider resistor 251. A node between the second voltage divider resistor 251 and the third voltage divider resistor 252 is electrically connected to the master control circuit 11. It is understood that the above-described battery voltage detection circuit 25 is simple in structure and has high reliability and a low cost.

As shown in FIG. 3-14, the fan drive circuit of the second implementation further includes a burner interface 28 to burn in a control program to the master control circuit 11. The burner interface 28 may be a SWD burner interface, but is not limited to the above.

As shown in FIGS. 15 to 16, the fan drive circuit of a third embodiment is provided. Portions of the fan drive circuit of the present embodiment are the same as those in the second embodiment and will not be repeated. Portions of the fan drive circuit of the present embodiment that are different from those in the second embodiment will be described in the following.

As shown in FIGS. 3-16 to FIG. 3-17, the three-phase drive circuit 12 of the third embodiment is essentially the same as the three-phase drive circuit 12 of the second embodiment. The master control circuit 11 of the third embodiment is different from that of the second embodiment. In the present embodiment, the master control circuit 11 includes a master control chip 111 and three three-phase control chips 112. Each of the three three-phase control chips 112 is electrically connected to the master control chip 111 and the three-phase drive circuit 12.

As shown in FIGS. 3-16 and 3-18, the fan drive circuit further includes a filter capacitor 253 and a sampling resistor 254 connected in series to the filter capacitor 253. The sampling resistor 254 is connected between the filter capacitor 253 and the ground. A node between the filter capacitor 253 and the sampling resistor 254 is electrically connected to the master control circuit 11. Further, the fan drive circuit further includes a signal amplification circuit 29. An input end of the signal amplification circuit 29 is connected to the node between the filter capacitor 253 and the sampling resistor 254. The signal amplification circuit 29 is configured to amplify a signal sampled by the sampling resistor 254 (i.e., a signal of the node between the filter capacitor 253 and the sampling resistor 254) and to provide the amplified signal to the master control circuit 11. In this way, the main control circuit 11 of the fan drive circuit may keenly detect an abnormal voltage or current signal when the fan drive circuit is abnormal and then perform protection against the abnormalities, such as stopping operating or reducing a fan speed. In this way, safety of using the fan drive circuit is improved.

As shown in FIG. 3-19, the transistor temperature detection circuit 24 of the third embodiment is essentially the same as that of the second embodiment and will not be repeated herein.

As shown in FIG. 3-20, a schematic view of a light control circuit 30 of the fan drive circuit in the third embodiment is provided. The light control circuit 30 includes a light-emitting element 301 and a control switch 302. A positive electrode of the light-emitting element 301 receives a drive voltage. A negative electrode of the light-emitting element 301 is grounded via two conductive ends of the resistor and the control switch 302. A control end of the control switch 302 is electrically connected to the master control circuit 11, such that the master control circuit 11 outputs a light control signal to the control end of the control switch 302 to control the light-emitting element 301 to emit light.

As shown in FIG. 3-21, the fan drive circuit further includes a Hall detection circuit 23. The Hall detection circuit 23 is electrically connected to the master control circuit 11 to detect a magnetic field generated by the DC brushless fan motor and to output a Hall detection signal to the master control circuit 11. In this way, the master control circuit 11 may be informed, based on the Hall detection signal, of a position of a rotor of the DC brushless fan motor, such that the master control circuit 11 may provide a corresponding control signal to control the DC brushless fan motor to operate. In this case, a start-up time length of the fan using the fan drive circuit is shorter, and the fan may not shake during starting-up, and a better user experience is provided.

As shown in FIG. 3-21, the Hall detection circuit 23 further includes a motor temperature detection element 232 connected between a Hall element 231 of the Hall detection circuit 23 and the master control circuit 11. The motor temperature detection element 232 may be a sampling resistor. By arranging the motor temperature detection element 232, the master control circuit 11 may be informed of whether a temperature of the DC brushless fan motor is abnormal. When the temperature of the DC brushless fan motor is abnormal, the master control circuit 11 may control the fan drive circuit to stop operating or operate at a lower power, such that an over-temperature protection is provided for the fan drive circuit, and reliability and the service life of the fan drive circuit are improved.

As shown in FIGS. 3-17 and 3-22, the fan drive circuit further includes a voltage conversion circuit 20. The voltage conversion circuit 20 is configured to receive a battery voltage (VB+), convert the battery voltage into a drive voltage (such as 15V), and provide the drive voltage to power supply ends of the three three-phase control chips 112. The master control chip 111 is configured to output a master control signal to the three three-phase control chips 112, such that each of the three three-phase control chips 112 outputs the respective control signal to the three-phase drive circuit 12.

The fan drive circuit further includes a switch control circuit 21. The switch control circuit 21 is electrically connected to the battery VBAT, the voltage conversion circuit 20, and the master control circuit 11 to control operation of the voltage conversion circuit 20. The switch control circuit 21 includes a keypad 211, a first switch transistor 212, a second switch transistor 213, and a third switch transistor 214. Two conductive ends of the first switch transistor 212 are respectively connected to the positive electrode of the battery VBAT and the input end of the voltage conversion circuit 20. A control end of the first switch transistor 212 is grounded via two conductive ends of the third switch transistor 214. The positive electrode of the battery VBAT is connected to the control end of the third switch transistor 214 via the two conductive ends of the first switch transistor 212 and a one-way diode 215. A control end of the second switch transistor 213 is grounded via the keypad 211. A control end of the third switch transistor 214 is electrically connected to the master control circuit 11. A node between the second switch transistor 213 and the one-way diode 215 is further electrically connected to a switch signal end of the master control circuit 11.

When the keypad 211 is pressed to be conductive, the second switch transistor 213 is turned on, the third switch transistor 214 is turned on, and the node between the second switch transistor 213 and the one-way diode 215 outputs a first switching signal (ON) to the switch signal end of the master control circuit 11. The first switch transistor 212 is turned on to enable the battery voltage of the battery VBAT to be supplied to the voltage conversion circuit 20. When the pressing on the keypad 211 is released, the second switch transistor 213 is turned off, the master control circuit 11 maintains the third switch transistor 214 to be turned on based on a power supply turn-on signal being output from the first switching signal to the control end of the third switch transistor 214, and the battery voltage of the battery VBAT is supplied to the voltage conversion circuit 20.

Further, when the battery voltage of the battery VBAT is supplied to the voltage conversion circuit 20, and when the keypad 211 is again pressed to be conductive, the node between the second switch transistor 213 and the one-way diode 215 outputs a second switching signal (OFF) to the switch signal end of the master control circuit 11, the master control circuit 11 controls the third switch transistor 214 to be turned off based on a power supply turn-off signal being output from the second switching signal to the control end of the third switch transistor 214. In this way, the first switch transistor 212 is turned off, the battery voltage of the battery VBAT cannot be supplied to the voltage conversion circuit 20 until the keypad 211 is again pressed.

The keypad 211, the first switch transistor 212, the second switch transistor 213 and the third switch transistor 214 operate together with the master control circuit 11 to control whether the battery voltage of the battery VBAT is supplied to the voltage conversion circuit 20. In this way, a simple control logic is provided, and the circuit has higher reliability.

As shown in FIG. 3-23, the fan drive circuit further includes a DC conversion circuit 22. The DC conversion circuit 22 is configured to receive the drive voltage (such as a DC voltage of 15V) and convert the drive voltage to other DC operating voltages, such as a DC operating voltage of 3.3V and 5V.

As shown in FIG. 3-24, the present disclosure further provides a portable fan 2. The portable fan 2 includes a fan drive circuit 3, a DC brushless fan motor 4, and fan blades 5 driven by the DC brushless fan motor. The fan drive circuit 3 may be arranged with the fan drive circuit as described in any of the above embodiments.

For the fan drive circuit and the portable fan 2 in the present embodiment, the master control circuit 11, the three-phase drive circuit 12, the inverted-phase electric potential detection circuit 14, and the DC brushless fan motor are arranged. The energy-saving performance and control performance of the fan motor are improved, such that reliability of the fan drive circuit and the fan 2 are improved. In addition, the service life of the fan drive circuit and the fan 2 is extended, the arrangement of the DC brushless fan motor allows the fan 2 to have a more compact and smaller configuration, and the fan 2 has increased competitiveness in the market.

An implementation 4 is shown in FIGS. 4-1 to 4-11.

The present disclosure provides a handheld fan. An air duct 11 is defined in an inner housing 1. Two sides of the air duct 11 are respectively connected to an air inlet 23 and an air outlet 24. At least a portion of a fan assembly 3 is received in the air duct 11. An outer housing 2 covers an outside of the inner housing 1. A side of a wire opening 12 of the inner housing 1 directly faces an electrical connection portion of the fan assembly 3. The other side of the wire opening 12 directly faces an electrical connection portion of a handheld portion 5 of the handheld fan. In this way, the wire opening 12 of the inner housing 1 allows a wire connected to the electrical connection portion of the fan assembly 3 to pass through. After the wire connected to the electrical connection portion of the fan assembly 3 passes through the wire opening 12 from a position directly facing the electrical connection portion of the handheld portion of the handheld fan 5, the wire is then connected to the electrical connection portion of the handheld portion of the fan 5. In this way, a length of the wire is reduced, durability of the wire in improved, an aesthetic appearance of wires is improved. Wires can be arranged stably, an appearance of the wire arrangement is improved, and the durability is improved.

As shown in FIGS. 4-1 to 4-11, FIG. 4-1 is a schematic view of the handheld fan according to embodiments of the present disclosure; FIG. 4-2 is a schematic view of a mounting bracket 6 of the handheld fan according to embodiments of the present disclosure; FIG. 4-3 is a schematic view of the handheld portion 5 of the handheld fan according to embodiments of the present disclosure; FIG. 4-4 is a schematic view of the wire opening 12 of the handheld fan according to embodiments of the present disclosure; FIG. 4-5 is a schematic view I of a wire groove 21 of the handheld fan according to embodiments of the present disclosure; FIG. 4-6 is a schematic view II of the wire groove 21 of the handheld fan according to embodiments of the present disclosure; FIG. 4-7 is a schematic view of a gear knob assembly 71 and a protection switch button assembly 72 of the handheld fan according to embodiments of the present disclosure; FIG. 4-8 is a schematic view of the inner housing 1 and the outer housing 2 of the handheld fan according to embodiments of the present disclosure; FIG. 4-9 is a schematic view of the air inlet 23 and the air outlet 24 of the handheld fan according to embodiments of the present disclosure; FIG. 4-10 is an enlarged view of a portion A in FIG. 4-9; and FIG. 4-11 is a schematic view of the fan assembly 3 of the handheld fan according to embodiments of the present disclosure. The handheld fan of the present embodiment includes an inner housing 1, an outer housing 2, and a fan assembly 3. The inner housing 1, the outer housing 2, and the fan assembly 3 will be described in detail.

For the inner housing 1, the fan assembly 3, and the outer housing 2:

The inner housing 1 defines an air duct 11, an air inlet 23 communicated to a side of the air duct 11, and an air outlet 24 communicated to the other side of the air duct 11. At least part of the fan assembly 3 is received in the air duct 11. The inner housing 1 defines a wire opening 12. A side of the wire opening 12 directly faces an electrical connection portion of the fan assembly 3, the other side of the wire opening 12 directly faces an electrical connection portion of a handheld portion 5 of the handheld fan. The electrical connection portion of the fan assembly 3 is electrically connected to the electrical connection portion of the handheld portion 5 by a wire passing through the wire opening 12. The handheld portion 5 has a mounting opening 4 and is connected to the outer housing 2. The mounting opening 4 directly faces the other side of the wire opening 12. The handheld fan further includes a mounting bracket 6, a second circuit board 73 and a gear knob assembly 71, all of which are arranged in the handheld portion 5. At least a portion of the mounting bracket 6 is received in the mounting opening 4. The mounting bracket 6 is connected to the inner housing 1, and the mounting bracket 6 defines a receiving space 61 allowing the wire to pass through. The electrical connection portion of the handheld portion 5 includes a first circuit board 7, the first circuit board 7 is arranged in the mounting bracket 6. The first circuit board 7 is plugged to the electrical connection portion of the fan assembly 3 by the wire. The second circuit board 73 is arranged in the mounting bracket 6, the second circuit board 73 is plugged to the first circuit board 7 by the wire. The gear knob assembly 71 is arranged in the mounting bracket 6. The gear knob assembly 71 is connected to the second circuit board 73. The second circuit board 73 is disposed opposite to the first circuit board 7. The outer housing 2 is arranged to cover an outside of the inner housing 1. A shielding plate 22 is arranged on the inner housing 1. The shielding plate 22 and the inner housing 1 enclose to form a wire groove 21. At least a portion of the first circuit board 7 is received in the wire groove 21.

Specifically, the air duct 11 defined the inner housing 1 is defined to allow air to flow through. The air enters the air duct 11 from the air inlet 23, and the air entering the air duct 11 is then discharged from the air outlet 24. The outer shell 2 covers the outside of the inner housing 1. The inner housing 1 defines a wire opening 12 allowing the wire to pass through. Two sides of the wire opening 12 respectively face the electrical connection portion of the fan assembly 3 and the electrical connection portion of the handheld portion 5 of the handheld fan. The electrical connection portion of the fan assembly 3 may refer to a circuit board connected to the fan motor. The wire connected to the circuit board passes through the wire opening 12 and then is connected to the first circuit board 7 of the electrical connection portion of the handheld portion 5. The mounting opening 4 of the handheld portion 5 faces the wire opening 12, the receiving space 61 of the mounting bracket 6 is communicated with the mounting opening 4 of the handheld portion 5. The first circuit board 7 and the second circuit board 73 are disposed opposite to each other and arranged on the mounting bracket 6. The wire passing through the alignment opening 12 passes through the mounting opening 4 of the handheld portion 5 and is then plugged to the first circuit board 7 arranged on the mounting bracket 6. For example, an end of the wire passing through the wire opening 12 is plugged, via a plugger, to the first circuit board 7, facilitating connection or disconnection between the wire and the first circuit board 7. The second circuit board 73 is plugged to the first circuit board 7 by the wire. For example, the second circuit board 73 is connected, via the wire, to the plugger connected to the first circuit board 7, achieving plugging between the second circuit board 73 and the first circuit board 7 and facilitating connection or disconnection between the second circuit board 73 and the first circuit board 7. The gear knob assembly 71 connected to the second circuit board 73 is configured to adjust a rotation speed of fan blades in the fan assembly 3 to control of an airflow speed. For example, when a knob in the gear knob assembly 71 is rotated, a gear of the fan is adjusted. When the knob in the gear knob assembly 71 is pressed, a power level of the battery 8 can be checked. The shielding plate 22 is disposed in the inner housing 1 near the handheld portion 5, a diameter of the inner housing 1 is gradually increased in a direction extending from the air inlet 23 to the air outlet 24. In this way, an end of the inner housing 1 near the air inlet 23 is inwardly recessed to form a recessed space. The shielding plate 22 is arranged at the inwardly recessed space. The inner housing 1 and the shielding plate 22 cooperatively form a wire groove 21. A portion of the first circuit board 7 extends to an inside of the wire groove 21, and the inside of the wire groove 21 provides a space for receiving the wire connected to the first circuit board 7. Alternatively, the entirety of the first circuit board 7 is arranged at an outside of the wire groove 21, and a portion of the wire connected to the first circuit board 7 is received in the wire groove 21. Another portion of the wire extends to the outside of the wire groove 21 and is then connected to the first circuit board 7. In this way, space utilization is improved.

The handheld fan of the present embodiment further includes a protection switch button assembly 72 and a battery 8. The protection switch button assembly 72 is arranged in the mounting bracket 6. The protection switch button assembly 72 is electrically connected to the first circuit board 7. The battery 8 is arranged in the handheld portion 5. The battery 8 is plugged into the first circuit board 7 via a wire.

Specifically, the battery 8 can be mounted in the handheld portion 5. The battery 8 and the first circuit board 7 are plugged into each other via the wire. The battery 8 can supply power to the fan assembly 3. The protection switch button assembly 72 electrically connected to the first circuit board 7 can control a circuit for power supply through the battery 8 to be conductive or disconnected. For example, the protection switch button assembly 72 is a slide switch. When a button of the protection switch button assembly 72 is slid to an end, the circuit is conducted. In this case, the motor in the fan assembly 3 operates to drive the fan blades to rotate. When the button of the protective switch button assembly 72 is slid to the other end, the circuit is disconnected, and in this case, the motor in the fan assembly 3 does not operate, and the fan blades do not rotate. In this way, an operator is prevented from accidentally touching the gear knob assembly 71 to accidentally turn on the fan.

The present disclosure provides the handheld fan. The air duct 11 is defined in the inner housing 1. The two sides of the air duct 11 is communicated to the air inlet 23 and the air outlet 24. At least part of the fan assembly 3 is received in the air duct 11. The outer housing 2 covers the outside of the inner housing 1. A side of a wire opening 12 of the inner housing 1 directly faces an electrical connection portion of the fan assembly 3. The other side of the wire opening 12 directly faces an electrical connection portion of the handheld portion 5 of the handheld fan. In this way, the wire opening 12 of the inner housing 1 allows the wire connected to the electrical connection portion of the fan assembly 3 to pass through. After the wire connected to the electrical connection portion of the fan assembly 3 passes through the wire opening 12 from a position directly facing the electrical connection portion of the handheld portion of the handheld fan 5, the wire is then connected to the electrical connection portion of the handheld portion of the fan 5. In this way, a length of the wire is reduced, durability of the wire in improved, an aesthetic appearance of wires is improved. Wires can be arranged stably, an appearance of the wire arrangement is improved, and the durability is improved.

In order to provide a detailed description of the handheld fan of the present disclosure, the above embodiment I provides a detailed description of the handheld fan, and based on the same concept, the present disclosure further provides a handheld fan, as detailed in embodiment II.

The embodiment II of the present disclosure provides a handheld fan.

The present disclosure provides the handheld fan. The air duct 11 is defined in the inner housing 1. The two sides of the air duct 11 is communicated to the air inlet 23 and the air outlet 24. At least part of the fan assembly 3 is received in the air duct 11. The outer housing 2 covers the outside of the inner housing 1. A side of the wire opening 12 of the inner housing 1 directly faces the electrical connection portion of the fan assembly 3. The other side of the wire opening 12 directly faces the electrical connection portion of the handheld portion 5 of the handheld fan. The electrical connection portion of the fan assembly 3 is electrically connected to the electrical connection portion of the handheld portion 5 via the wire passing through the wire opening 12. In this way, the wire opening 12 of the inner housing 1 allows the wire connected to the electrical connection portion of the fan assembly 3 to pass through. After the wire connected to the electrical connection portion of the fan assembly 3 passes through the wire opening 12 from a position directly facing the electrical connection portion of the handheld portion of the handheld fan 5, the wire is then connected to the electrical connection portion of the handheld portion of the fan 5. In this way, a length of the wire is reduced, durability of the wire in improved, an aesthetic appearance of wires is improved. Wires can be arranged stably, an appearance of the wire arrangement is improved, and the durability is improved.

An implementation 5 is shown in FIGS. 5-1 to 5-6.

As shown in FIGS. 5-1 and 5-2, the portable fan includes a housing 1, a fan assembly 2, a motor 3, and a drive circuit board 4. The housing 1 defines an air inlet 161, a receiving cavity 162, and an air outlet 163, where the air inlet 161, the receiving cavity 162, and the air outlet 163 are communicated with each other. The fan assembly 2, the motor 3, and the drive circuit board 4 are arranged inside the housing 1. The drive circuit board 4 is electrically connected to the motor 3 to drive the fan assembly 2 to rotate to drive the airflow to flow from the air inlet 161, flowing through the receiving cavity 162, to be discharged out through the air outlet 163.

As shown in FIGS. 5-1 and 5-2, the housing 1 includes a front housing 11 and a rear housing 12. The front housing 11 includes a first airflow housing 111 and a first handheld housing 112, the rear housing 12 includes a second airflow housing 121 and a second handheld housing 122. The first airflow housing 111 and the second airflow housing 121 cooperatively define an air outlet portion 16. The first handheld housing 112 and the second handheld housing 122 cooperatively form a handheld portion 17. It is understood that the first airflow housing 111 and the second airflow housing 121 may be connected to each other in a front-rear direction or in a left-right direction. The first handheld housing 112 and the second handheld housing 122 may be connected to each other in the front-back direction or in the left-right direction. The handheld portion 17 is arranged with a switch 5, an interface 6, and a battery 7. In the present embodiment, the switch 5 is an infinite speed adjustment switch 5. Of course, in other embodiments, the first handheld housing 112 and the second handheld housing 122 may be omitted. Alternatively, the fan may be a desktop fan, a neck fan, a clip fan, a stand fan, or fans in other common forms.

As shown in FIGS. 5-2 to 5-4, the first airflow housing 111 includes a first outer housing and a first inner housing mating with the first outer housing in an inner-outer direction. The first inner housing and the first outer housing may be attached to each other. The first inner housing and the first outer housing both extend horizontally towards the front. The second airflow housing 121 includes a second outer housing and a second inner housing mating with the second outer housing in the inner-outer direction. A rear end of the second inner housing and a rear end of the second outer housing are spaced apart from each other and are connected to each other via a connection member. The second outer housing extend horizontally towards the front. The second inner housing extend firstly horizontally from the rear towards the front, and subsequently, extend outwardly in a radial direction. A front end of the second inner housing is connected to a front end of the second outer housing. The front end of the second inner housing abuts against the rear end of the first inner housing. In the present embodiment, the first outer housing and the second outer housing are integrally molded to form a one-piece structure. In other embodiments, the first outer housing and the second outer housing may be separately molded. Each of the first airflow housing 111 and the second airflow housing 121 is a double-layered housing. Therefore, a more stable structure is provided. A change in a shape of the second inner housing enables the airflow to be pressurized, such that the airflow is stronger, and an air flowing distance is longer. Of course, in other embodiments, the first airflow housing 111 and/or the second airflow housing 121 may be a single-layered housing 1.

As shown in FIGS. 5-1 and 5-2, the housing 1 further includes a pressurizing member 13 arranged inside the first airflow housing 111. A plurality of connection blades 14 connect the pressurizing member 13 with the front housing 11. A base 131 and a sleeve 132 are arranged inside the pressurizing member 13. The base 131 is disposed between a front end and a rear end of the pressurizing member 13 and defines an avoiding space 1321 backward inside the pressurizing member 13. The base 131 defines a receiving portion 1322 towards the front inside the pressurizing member 13. The sleeve 132 protrudes from the base 131 towards a receiving cavity 162, and that is, the sleeve 132 protrudes backwardly from the base 131, and the sleeve 132 is hollow.

As shown in FIGS. 5-1 and 5-2, the air inlet 161 is located in a radially inward region of the second inner housing. The air outlet 163 is located in a region between the pressurizing member 13 and the radial direction of the first inner housing. The fan assembly 2 includes a hub 21 and a plurality of fan blades 22, and the plurality of fan blades 22 are spaced apart from each other and arranged on an outer surface of the hub 21. The hub 21 includes an airflow guiding surface 212 that is radially increased from the rear to the front. The pressurizing member 13 includes a pressurizing surface 133 that is radially increased from the rear to the front. The airflow guiding surface 212 and the pressurizing surface 133 are disposed in close proximity to each other having an interval therebetween, allowing the airflow to be blown smoothly towards the front. An air duct, that is extending radially outwardly, is formed from the air inlet 161 to the air outlet 163, such that the airflow is pressurized inside the housing 1, and a relatively large air outlet surface is formed.

As shown in FIGS. 5-1 to 5-4, the fan assembly 2 includes the hub 21 and the plurality of fan blades 22. The plurality of fan blades 22 are spaced apart from each other and arranged on an outer surface of the hub 21. A rotation shaft 23 is fixedly arranged at a center of an inside of the hub 21. The motor 3 includes a stator 31 and a rotor 32. The stator 31 and the rotor 32 are both arranged inside the hub 21. Further, the hub 21 includes an annular extension wall 211 that is arranged inside the hub 21 and extends for one loop of the hub 21. The stator 31 and the rotor 32 are arranged inside the extension wall 211. The stator 31 sleeves an outside of the sleeve 132. The stator 31 includes a coil 311. The rotor 32 is radially disposed between the stator 31 and the hub 21. The rotation shaft 23 is inserted into the sleeve 132, and the extension wall 211, the stator 31 and the rotor 32 extend forwardly into the avoiding space 1321.

As shown in FIGS. 5-1 and 5-2, the extension wall 211 extends forwardly beyond the airflow guiding surface 212. The airflow guiding surface 212 and the pressurizing surface 133 are disposed in close proximity to each other and are spaced apart from each other. Therefore, a gap between the airflow guiding surface 212 and the pressurizing surface 133 is misaligned with the front end of the extension wall 211, and dust may not enter the extension wall 211. The stator 31 and the rotor 32 do not extend forwardly beyond the extension wall 211. The extension wall 211, the stator 31 and the rotor 32 extend forwardly into the avoiding space 1321, such that the extension wall 211, the stator 31 and the rotor 32 are partially received the avoiding space 1321.

As shown in FIGS. 5-1 and 5-2, the drive circuit board 4 is not disposed between the base 131 and the stator 31, the battery 7 is electrically connected to the drive circuit board 4, and the drive circuit board 4 is electrically connected to leads of the coil 311, so as to drive the fan assembly 2 to rotate to drive the airflow from the air inlet 161, flowing through the receiving cavity 162, to be discharged from the air outlet 163. In the present embodiment, the drive circuit board 4 is received in the receiving portion 1322 formed by the base 131 towards the front. The front end of the pressurizing member 13 further includes a front cover 15, the front cover 15 covers the front end of the receiving portion 1322. The front cover 15 is recessed rearwardly to form a negative pressure region 151. By arranging the front cover 15, the receiving portion 1322 is covered to shield and protect the drive circuit board 4. On the other hand, the negative pressure region 151, which is formed by the front cover 15 being recessed rearwardly, compensates air to the air outlet 163 to increase the amount of airflow at the air outlet 163.

As shown in FIGS. 5-1 to 5-4, in this embodiment, the motor 3 is a three-phase motor, and the coil 311 includes twelve windings. The number of the windings is large, and therefore, a space inside the motor 3 is limited. Since the drive circuit board 4 is not disposed between the base 131 and the stator 31, electrical connection between the leads of the coil 311 and the drive circuit board 4 is simpler and more convenient, and in addition, the space between the base 131 and the stator 31 is further reduced, such that utilization of the space inside the portable fan is more reasonable, and the the portable fan can be miniaturized.

As shown in FIG. 5-5, a schematic view of the portable fan is shown. In the present embodiment, the drive circuit board 4 is arranged inside the handheld portion 17 and is disposed between the switch 5 and the interface 6. The switch 5 is connected to the drive circuit board 4, or the interface 6 is connected to the drive circuit board 4. Other structures and performance of the present embodiment are substantially the same as those in the first embodiment, and will not be repeated herein.

As shown in FIGS. 5-6, a schematic view of the portable fan is shown. In the present embodiment, the drive circuit board 4 is arranged inside the handheld portion 17 and is disposed below the battery 7. Other structures and performance of the present embodiment are substantially the same as those in the first embodiment, and will not be repeated herein.

The above shows preferred implementation of the present disclosure, and does not limit the scope of the present disclosure. Any equivalent structure or equivalent process transformation performed based on the specification and the accompanying drawings of the present disclosure, applied directly or indirectly in other related technical fields, shall be included in the scope of the present disclosure.

## Claims

1. A portable fan, comprising:
an air duct portion, comprising a body portion, wherein the body portion defines an air guiding cavity therein; the air duct portion defines an air outlet and an air inlet respectively at opposite ends thereof; the air outlet and the air inlet are communicated to the air guiding cavity, and a positioning protruding post is arranged inside the body portion;
an airflow portion, comprising rotation air blades and a drive portion that is driveably connected to the rotation air blades, wherein the rotation air blades are rotatably received in the air guiding cavity and are arranged facing towards the air outlet; the drive portion comprises a stator and a rotor sleeving an outside of the stator; the rotor is fixedly mounted on the rotation air blades and is coaxially arranged with the rotation air blades; the stator fixedly sleeves the positioning protruding post;
a handheld portion, connected to the air duct portion, wherein the handheld portion defines a mounting cavity; a power supply assembly is received in the mounting cavity; and the power supply assembly is electrically connected to the drive portion.

2. The portable fan according to claim 1, wherein,
the body portion comprises a first housing and a second housing connected to the first housing; the air guiding cavity is formed between the first housing and the second housing; the first housing defines the air inlet; the second housing defines the air outlet; the positioning protruding post is arranged on the second housing and extends along an extension direction of the air guiding cavity.

3. The portable fan according to claim 1, wherein
the rotation air blades defines a fixation hole, an axis of the fixation hole coincides with an axis of the rotation air blades; the airflow portion further comprises a rotation shaft; a first end of the rotation shaft is fixedly received in the fixation hole; a positioning hole is defined inside the positioning protruding post; an axis of the positioning hole coincides with an axis of the rotation shaft; a second end of the rotation shaft is rotatably received in the positioning hole; and
the airflow portion further comprises a bearing portion; an outer ring of the bearing portion is fixed in the positioning hole; and an inner ring of the bearing portion sleeves the second end of the rotation shaft; the bearing portion comprises a rolling bearing; the airflow portion further comprises a limiting member; the limiting member is mounted at the second end of the rotation shaft; the bearing portion is disposed between the limiting member and the first end of the rotation shaft; the bearing portion comprises a plurality of bearing portions; an inner flange is arranged on an inner wall of the positioning hole; the inner flange is disposed between two adjacent bearing portions of the plurality of bearing portions to arrange the two adjacent bearing portions to be spaced apart from each other; the bearing portion comprises a slide bearing; the airflow portion further comprises two sealing rings; the two sealing rings both sleeve the rotation shaft and are respectively located at two sides of the slide bearing.

4. The portable fan according to claim 2, wherein,
the handheld portion comprises a third housing and a fourth housing connected to the third housing; the mounting cavity is formed between the third housing and the fourth housing; the first housing comprises a housing body and an air duct liner; the air duct liner is mounted on the housing body; an air duct is defined inside the air duct liner; and the air guiding cavity is formed between the air duct liner and the second housing.

5. The portable fan according to claim 2, wherein,
the drive portion is a three-phase motor; the handheld portion is arranged with a charging port; the charging port is electrically connected to the power supply assembly; and/or
the air duct portion and the handheld portion are fixedly or pivotally connected to each other.

6. The portable fan according to claim 1, wherein, a control circuit of the portable fan comprises:
a charging and power supply circuit the charging and power supply circuit is configured to be electrically connected to an external power source and the power supply assembly to receive an external voltage to charge the power supply assembly and to output a power supply voltage;
a fan drive circuit, electrically connected with the charging and power supply circuit and the rotation air blades to drive the rotation air blades to rotate;
a control switch, wherein a control end of the control switch is configured to receive the external voltage and is grounded; a first conductive end of the control switch is electrically connected to the power supply assembly to receive an output voltage from the power supply assembly; a second conductive end of the control switch is electrically connected to the fan drive circuit; the control switch is disconnected when receiving the external voltage and is conducted when not receiving the external voltage; and
a master control circuit, electrically connected to the charging and power supply circuit, the fan drive circuit and the control switch.

7. The portable fan according to claim 6, wherein,
the charging and power supply circuit comprises a charging port and a charge management chip; a power end of the charging port receives the external voltage and is electrically connected to a charging input pin of the charge management chip; the power end of the charging port is electrically connected to a negative electrode of a voltage stabilizing transistor; a positive electrode of the voltage stabilizing transistor is grounded; a switch pin of the charge management chip is electrically connected to a positive electrode of the power supply assembly via a first inductor; a boost output pin of the charge management chip is configured to output the power supply voltage; a boost input pin of the charge management chip is connected, via a first connection resistor, to a node between the power supply assembly and the first inductor and is further grounded via a first grounding capacitor.

8. A fan drive circuit of a portable fan, comprising:
a master control circuit;
a three-phase drive circuit, comprising at least three signal input ends and three drive signal output ends; each of the at least three signal input ends is electrically connected to the master control circuit to receive control signals; the three drive signal output ends are electrically connect to three signal ends of a direct-current brushless fan motor to output a three-phase drive signal to drive the DC brushless fan motor to rotate; and
an inverted-phase electric potential detection circuit, comprising three detection branches; wherein each detection branch comprises a detection end and a detection output end electrically connected to the detection end; three detection ends of the three detection branches are respectively electrically connected to the three drive signal output ends; three detection output ends of the three detection branches are electrically connected to the master control circuit to respectively output a first detection signal, a second detection signal, and a third detection signal; the master control circuit is informed of a phase of the three-phase drive signal based on the first detection signal, the second detection signal, and the third detection signal to adjust the control signals.

9. The fan drive circuit according to claim 8, wherein,
the detection branch comprises a first detection resistor, a second detection resistor, and a third detection resistor; the first detection resistor and the second detection resistor are connected to each other in series; an end of the first detection resistor away from the second detection resistor is the detection end; an end of the second detection resistor away from the first detection resistor is grounded; a node between the first detection resistor and the second detection resistor is the detection output end.

10. The fan drive circuit according to claim 8, wherein,
the three-phase drive circuit comprises a first transistor, a second transistor, a third transistor, a fourth transistor, a fifth transistor, a sixth transistor, a seventh transistor, an eighth transistor, and a ninth transistor;
a first conductive end of the first transistor, a first conductive end of the second transistor, and a first conductive end of the third transistor are connected to a power supply end; a first conductive end of the fourth transistor is connected to the power supply end; a first conductive end of the fifth transistor is connected to the power supply end; a first conduction end of the sixth transistor is connected to the power supply end;
a control end of the fourth transistor, a control end of the fifth transistor, and a control end of the sixth transistor are electrically connected to the master control circuit; a control end of the seventh transistor is electrically connected to the control end of the fourth transistor, a control end of the eighth transistor is electrically connected to the control end of the fifth transistor, and a control end of the ninth transistor is electrically connected to the control end of the sixth transistor, so as to receive the control signals;
second conduction ends of the fourth transistor, the fifth transistor, and the sixth transistor are grounded; a first conductive end of the seventh transistor is connected to a second conductive end of the first transistor; a second conductive end of the seventh transistor is grounded; a first conductive end of the eighth transistor is connected to a second conductive end of the second transistor; a second conductive end of the eighth transistor is grounded; a first conductive end of the ninth transistor is connected to the second conductive end of the third transistor; a second conductive end of the ninth transistor is grounded;
a node between the first conductive of the seventh transistor and the second conductive of the first transistor, a node between the first conductive of the eighth transistor and the second conductive of the second transistor, and a node between the first conductive of the ninth transistor and the second conductive of the third transistor respectively serve as the three drive signal output ends;
the at least three signal input ends are three PWM signal input ends; and the control signals comprise three PWM signals;
the fan drive circuit further comprises a current detection circuit; the second conductive ends of the seventh transistor, the eighth transistor, and the ninth transistor are all grounded via the current detection circuit;
the current detection circuit is electrically connected to the master control circuit; the current detection circuit comprises a sense resistor and a sense capacitor; the second conductive ends of the seventh transistor, the eighth transistor, and the ninth transistor are grounded via the sense resistor and the sense capacitor sequentially.

11. The fan drive circuit according to claim 8, wherein,
the three-phase drive circuit comprises a first transistor, a second transistor, a third transistor, a fourth transistor, a fifth transistor, and a sixth transistor; a first conductive end of the first transistor, a first conductive end of the second transistor, and a first conductive end of the third transistor are connected to a power supply end;
a first conductive end of the fourth transistor is connected to a second conductive end of the first transistor;
a first conductive end of the fifth transistor is connected to a second conductive end of the second transistor; a first conduction end of the sixth transistor is connected to a second conductive end of the third transistor;
a node between the first conductive of the fourth transistor and the second conductive of the first transistor, a node between the first conductive of the fifth transistor and the second conductive of the second transistor, and a node between the first conductive of the sixth transistor and the second conductive of the third transistor respectively serve as the three drive signal output ends;
control ends of the first transistor, the second transistor, the third transistor, the fourth transistor, the fifth transistor, and the sixth transistor are electrically connected to the master control circuit to receive the control signals; and the control signals include six PWM signals.

12. The fan drive circuit according to claim 11, wherein,
the fan drive circuit further comprises a current detection circuit; the second conductive end of the sixth transistor is grounded via the current detection circuit; the current detection circuit is electrically connected to the master control circuit; the current detection circuit comprises a sense resistor and a sense capacitor; the second conductive end of the sixth transistor is grounded via the sense resistor; the sense capacitor is connected in parallel with the sense resistor; a node between the sense resistor and the second conduction end of the sixth transistor is electrically connected to the master control circuit; the current detection circuit comprises a first series resistor, a second series resistor, a parallel resistor; the parallel resistor is connected in parallel with the sense resistor; the first series resistance is connected between an end of the sense capacitor and an end of the sense resistor; the second series resistance is connected between the other end of the sense capacitor and the other end of the sense resistor.

13. The fan drive circuit according to claim 12, wherein,
the master control circuit comprises a master control chip and three three-phase control chips; each of the three three-phase control chips is electrically connected to the master control chip and the three-phase drive circuit;
the fan drive circuit further comprises a voltage conversion circuit; the voltage conversion circuit is configured to receive a battery voltage, convert the battery voltage into a drive voltage, and provide the drive voltage to power supply ends of the three three-phase control chips;
the fan drive circuit further comprises a switch control circuit; the switch control circuit is electrically connected to the battery, the voltage conversion circuit, and the master control circuit to control operation of the voltage conversion circuit; the switch control circuit comprises a keypad, a first switch transistor, a second switch transistor, and a third switch transistor; two conductive ends of the first switch transistor are respectively connected to a positive electrode of the battery and an input end of the voltage conversion circuit; a control end of the first switch transistor is grounded via two conductive ends of the third switch transistor; the positive electrode of the battery is connected to the control end of the third switch transistor via the two conductive ends of the first switch transistor and a one-way diode; a control end of the second switch transistor is grounded via the keypad; a control end of the third switch transistor is electrically connected to the master control circuit; a node between the second switch transistor and the one-way diode is further electrically connected to a switch signal end of the master control circuit;
the fan drive circuit further comprises a direct current (DC) conversion circuit; the DC conversion circuit is configured to receive the drive voltage and convert the drive voltage to an DC operating voltage.

14. The fan drive circuit according to claim 8, wherein,
the fan drive circuit further comprises a battery voltage detection circuit; the battery voltage detection circuit comprises a second voltage divider resistor and a third voltage divider resistor that is connected in series to the second voltage divider resistor; a node between the second voltage divider resistor and the third voltage divider resistor is electrically connected to the master control circuit; or
the fan drive circuit further comprises a filter capacitor and a sampling resistor connected in series to the filter capacitor; the sampling resistor is connected between the filter capacitor and the ground; a node between the filter capacitor and the sampling resistor is electrically connected to the master control circuit; the fan drive circuit further comprises a signal amplification circuit; a node between the filter capacitor and the sampling resistor is electrically connected to the master control circuit; the signal amplification circuit is configured to amplify a signal at the node and to provide the amplified signal to the master control circuit;
the fan drive circuit further comprises a Hall detection circuit; the Hall detection circuit is electrically connected to the master control circuit to detect a magnetic field generated by the DC brushless fan motor and to output a Hall detection signal to the master control circuit; the master control circuit is informed, based on the Hall detection signal, of a position of a rotor of the DC brushless fan motor; the Hall detection circuit further comprises a motor temperature detection element connected between a Hall element of the Hall detection circuit and the master control circuit;
the fan drive circuit further comprises a transistor temperature detection circuit that is disposed adjacent to each transistor of the three-phase drive circuit and comprises a first voltage divider resistor and a thermistor connected in series with the first voltage divider resistor; the thermistor is configured to sense a temperature of each transistor of the three-phase drive circuit; a node between the first voltage divider resistor and the thermistor is electrically connected to the master control circuit and is configured to output a temperature signal, enabling the master control circuit to control, based on the temperature signal, the fan drive circuit to enter or not enter a temperature protection state; the thermistor is connected between the first voltage divider resistor and the ground; the transistor temperature detection circuit further comprises a voltage regulated capacitor connected in parallel with the thermistor.

15. The fan drive circuit according to claim 8, wherein,
the master control circuit comprises a master control chip and an auxiliary chip; two three-phase drive circuits, two inverted-phase electric potential detection circuits, and two DC brushless fan motors are arranged in one-to-one correspondence to each other; the master control chip is electrically connected to one of the two three-phase drive circuits to output the control signals to one of the two three-phase drive circuits to drive the respective one of the two brushless DC fan motors; one of the two inverted-phase electric potential detection circuits is electrically connected to respective one three-phase drive circuit and outputs the first detection signal, the second detection signal, and the third detection signal to the master control chip; the master control chip is informed of the phase of the three-phase drive signal of the respective one three-phase drive circuit to adjust the control signals output to the respective one three-phase drive circuit;
the auxiliary chip is electrically connected to the other one of the two three-phase drive circuits to output the control signals to the other one of the two three-phase drive circuits to drive the other one of the two DC brushless fan motors; the other one of the two inverted-phase electric potential detection circuits is electrically connected to the respective one three-phase drive circuit and outputs a corresponding first detection signal, a corresponding second detection signal and a corresponding third detection signal to the auxiliary chip; the auxiliary chip is informed of the phase of the three-phase drive signal of the other three-phase drive circuit to adjust the control signals output to the other three-phase drive circuit.

16. A handheld fan, comprising: an inner housing, an outer housing, and a fan assembly; wherein,
an air duct, an air inlet communicated with a side of the air duct, and an air outlet communicated with the other side of the air duct are defined in an inner housing; at least a portion of the fan assembly is received in the air duct; the outer housing covers an outside of the inner housing; the inner housing defines a wire opening; a side of the wire opening directly faces an electrical connection portion of the fan assembly; the other side of the wire opening directly faces an electrical connection portion of a handheld portion of the handheld fan; the electrical connection portion of the fan assembly is electrically connected to the electrical connection portion of the handheld portion by a wire passing through the wire opening.

17. The handheld fan according to claim 16, wherein,
the handheld portion has a mounting opening and is connected to the outer housing; the mounting opening directly faces the other side of the wire opening;
the handheld fan further comprises a mounting bracket, at least a portion of the mounting bracket is received in the mounting opening; the mounting bracket is connected to the inner housing; and the mounting bracket defines a receiving space allowing the wire to pass through;
the electrical connection portion of the handheld portion comprises a first circuit board; the first circuit board is arranged in the mounting bracket; the first circuit board is plugged to the electrical connection portion of the fan assembly via the wire.

18. The handheld fan according to claim 17, further comprising:
a second circuit board and a gear knob assembly, wherein the second circuit board is arranged in the mounting bracket; the second circuit board is plugged to the first circuit board via the wire; the gear knob assembly is arranged in the mounting bracket; the gear knob assembly is connected to the second circuit board; the second circuit board is disposed opposite to the first circuit board; and
a protection switch button assembly, wherein the protection switch button assembly is arranged in the mounting bracket; the protection switch button assembly is electrically connected to the first circuit board.

19. The handheld fan according to claim 17, further comprising:
a battery, wherein the battery is mounted in the handheld portion and is plugged to the first circuit board via the wire.

20. The handheld fan according to claim 17, wherein,
a shielding plate is arranged on the inner housing; the shielding plate and the inner housing enclose to form a wire groove; and
at least a portion of the first circuit board is received in the wire groove.
